# EUROPEAN PATENT SPECIFICATION

(11) **EP 4 218 284 B1**
(45) Date of publication and mention of the grant of the patent: **27.05.2026**
(21) Application number: 20955743.8
(22) Date of filing: 30.09.2020
(51) Int. Cl.: H04B 7/185, H04W 84/06, H04W 24/10, H04W 48/12, H04W 48/16

(54) **MEASUREMENT CONFIGURATION AND REPORTING SCHEMES IN WIRELESS COMMUNICATIONS**
MESSKONFIGURATION UND BERICHTSSCHEMATA IN DER DRAHTLOSEN KOMMUNIKATION
CONFIGURATION DE MESURE ET SCHÉMAS DE RAPPORT DANS UNE COMMUNICATION SANS FIL

(43) Date of publication of application: 02.08.2023
(73) Proprietor: ZTE Corporation, Shenzhen, Guangdong 518057 (CN)
(72) Inventor: GAO, Yuan, Shenzhen, Guangdong 518057 (CN); HUANG, He, Shenzhen, Guangdong 518057 (CN); LIU, Jing, Shenzhen, Guangdong 518057 (CN); ZHANG, Mengjie, Shenzhen, Guangdong 518057 (CN)
(74) Representative: Vossius & Partner Patentanwälte Rechtsanwälte mbB
(86) International application number: PCT/CN2020/119528
(87) International publication number: WO 2022/067718

(56) References cited:
- CN-A- 107 820 726
- US-A1- 2013 005 356
- US-A1- 2019 150 015
- US-A1- 2020 252 822
- SONY: "Mobility management in NTN", vol. RAN WG2, no. electronic; 20200817 - 20200828, 6 August 2020 (2020-08-06), XP051910933, Retrieved from the Internet <URL:https://ftp.3gpp.org/tsg_ran/WG2_RL2/TSGR2_111-e/Docs/R2-2007183.zip> [retrieved on 20200806]
- NEC: "Location based mobility enhancement", vol. RAN WG2, no. Chongqing, China;, 3 October 2019 (2019-10-03), XP051804046, Retrieved from the Internet <URL:https://ftp.3gpp.org/tsg_ran/WG2_RL2/TSGR2_107bis/Docs/R2-1912977.zip> [retrieved on 20191003]
- ERICSSON: "NR QoE Measurement Triggering, Configuration, Collection and Reporting", vol. RAN WG2, no. Electronic meeting; 20200817 - 20200828, 6 August 2020 (2020-08-06), XP052360715, Retrieved from the Internet <URL:https://ftp.3gpp.org/tsg_ran/WG2_RL2/TSGR2_111-e/Docs/R2-2007600.zip> [retrieved on 20200806]
- INTEL CORPORATION: "Mobility enhancement for NTN", vol. RAN WG2, no. E-Meeting, USA; 20200817 - 20200828, 7 August 2020 (2020-08-07), XP051911793, Retrieved from the Internet <URL:https://ftp.3gpp.org/tsg_ran/WG2_RL2/TSGR2_111-e/Docs/R2-2006930.zip> [retrieved on 20200807]
- ZTE CORPORATION ET AL: "Consideration on the measurement configuration and reporting in NTN", vol. RAN WG2, no. Electronic; 20201102 - 20201113, 23 October 2020 (2020-10-23), XP051942620, Retrieved from the Internet <URL:https://ftp.3gpp.org/tsg_ran/WG2_RL2/TSGR2_112-e/Docs/R2-2009804.zip> [retrieved on 20201023]
- ZTE CORPORATION, SANECHIPS: "SMTC configuration in asynchronous networks", 3GPP DRAFT; R2-1802022 SMTC CONFIGURATION IN ASYNCHRONOUS NETWORKS, vol. RAN WG2, 15 February 2018 (2018-02-15), Athens, Greece, pages 1 - 10, XP051399792
- CATT: "Measurement Initiation Issue for NTN System", 3GPP DRAFT; R2-1914495, vol. RAN WG2, 8 November 2019 (2019-11-08), Reno, USA, pages 1 - 6, XP051816565

## Description

### TECHNICAL FIELD

This patent document generally relates to systems, devices, and techniques for wireless communications.

### BACKGROUND

Wireless communication technologies are moving the world toward an increasingly connected and networked society. The rapid growth of wireless communications and advances in technology has led to greater demand for capacity and connectivity. Other aspects, such as energy consumption, device cost, spectral efficiency, and latency are also important to meeting the needs of various communication scenarios. In comparison with the existing wireless networks, next generation systems and wireless communication techniques need to provide support for an increased number of users and devices

3GPP R2-1912977 relates to location based mobility enhancement.

3GPP R2-2007600 relates to NR QoE measurement triggering, configuration, collection, and reporting.

US 2013/005356 A1 relates to a radio communication system, radio terminal, radio network, radio communication method and program.

Document US 2020/252822 A1 shows methods for performing a cell measurement operation by a terminal configured with dual connectivity (DC), thereby receiving configuration information related to measurements including measurement object information as well as SMTC configuration information and reporting configurations.

Document SONY: "Mobility management in NTN", 3GPP DRAFT; R2-2007183, vol. RAN WG2, 6 August 2020, is a 3GPP paper identifying inter-alia the need for enhancement to existing measurement configurations to address absolute propagation delay difference between satellites.

### SUMMARY

The invention is specified by the independent claims. Preferred embodiments are defined in the dependent claims.

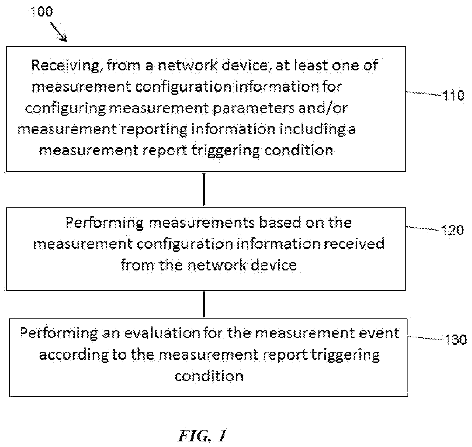

In the following the invention is best understood in view of figure 1 and the associated passages relating to "Implementation 5". The remaining implementations, embodiments, aspects and examples disclosed below are included for illustrative purpose and for facilitating the understanding of the invention.

In the following description, although numerous features may be designated as optional, it is nevertheless acknowledged that all features comprised in the independent claims are not to be read as optional.

This document relates to methods, systems, and devices for measurement configuration and reporting schemes in wireless communications.

In one aspect, a wireless communication method is disclosed. The wireless communication method is performed by a user device and comprises: receiving, from a network device, at least one of measurement configuration information for configuring measurement parameters or measurement reporting information including a measurement report triggering condition; performing measurements based on the measurement configuration information received from the network device, and performing an evaluation for the measurement event according to the measurement report triggering condition.

In another aspect, a wireless communication method is disclosed. The wireless communication method is performed by a network device and comprises: transmitting, to a user device, at least one of measurement configuration information for configuring measurement parameters or measurement reporting information including a measurement report triggering condition; and receiving, from the user device, a measurement report including results of measurements according to the measurement reporting information.

In another aspect, a wireless communication apparatus comprising a processor configured to perform the disclosed methods is disclosed.

In another aspect, a computer readable medium having code stored thereon is disclosed. The code, when implemented by a processor, causes the processor to implement a method described in the present document.

These, and other features, are described in the present document.

### BRIEF DESCRIPTION OF THE DRAWING

FIG. 1 shows a flowchart showing an example method for a measurement configuration and reporting that is performed by a user device based on some implementations of the disclosed technology.
FIG. 2 shows an example of measurement report triggering condition configured as an area scope expressed with a reference location and a radius associated with the reference location based on some implementations of the disclosed technology.
FIG. 3 shows another example of measurement report triggering condition configured as an area scope expressed with reference locations based on some implementations of the disclosed technology.
FIG. 4 shows another example of measurement report triggering condition configured as an area scope expressed with a list of tracking area identifiers (TAIs) of terrestrial network (TN) cells based on some implementations of the disclosed technology.
FIG. 5 shows an example method for a measurement configuration and reporting that is performed by a network device based on some implementations of the disclosed technology.
FIG. 6 shows an example of wireless communication including a base station (BS) and user equipment (UE) based on some implementations of the disclosed technology.
FIG. 7 shows an example of a block diagram of a portion of an apparatus based on some implementations of the disclosed technology.

### DETAILED DESCRIPTION

The disclosed technology provides implementations and examples of measurement configuration and reporting schemes in wireless communications. While 5G terminology is used in some cases to facilitate understanding of the disclosed techniques, which may be applied to wireless systems and devices that use communication protocols other than 5G or 3GPP protocols.

In NR, the measurement configuration include following parameters:
- Measurement objects: A list of objects on which a UE (user equipment) shall perform the measurements.
- Reporting configurations: A list of reporting configurations where there can be one or multiple reporting configurations per measurement object.
- Measurement identities: For measurement reporting, a list of measurement identities where each measurement identity links one measurement object with one reporting configuration.
- Quantity configurations: The quantity configuration defines the measurement filtering configuration used for all event evaluation and related reporting, and for periodical reporting of that measurement.
- Measurement gaps: Periods that the UE may use to perform measurements.

The measurement gap is configured per UE for a list of measurement objects. For the NR measurement object, SMTC (SSB based measurement timing configuration) can be configured and UE will perform measurement based on the SMTC configuration during the measurement gap.

Different cells may be deployed in a same frequency and thus may be configured as a same measurement object. The measurement object is a list of objects on which the UE is to perform measurements. For example, terrestrial network cells vs non-terrestrial network cells and non-terrestrial network cells served by satellite or HAPS in different orbits. As a result, it may be difficult for UE to perform measurements on all the cells based on the SMTC configuration per measurement object during the same measurement gap. The SSB refers to synchronization signal/PBCH block.

The UE performs measurements based on the configuration and the measurement report can be triggered periodically or by events (e.g. A1/A2/A3/A4/A5/A6/B1/B2). Examples of such events can include followings:
Event A1: Serving becomes better than absolute threshold.
Event A2: Serving becomes worse than absolute threshold.
Event A3: Neighbour becomes amount of offset better than PCell/PSCell.
Event A4: Neighbour becomes better than absolute threshold.
Event A5: PCell/PSCell becomes worse than absolute threshold1 AND Neighbour/SCell becomes better than another absolute threshold2.
Event A6: Neighbour becomes amount of offset better than SCell.
Event B1: Neighbour becomes better than absolute threshold.
Event B2: PCell becomes worse than absolute threshold1 AND Neighbour becomes better than another absolute threshold2.

For cells with large size (e.g. non-terrestrial network cells served by satellites), the reference signal (RS) measurements, for example, RSRP (Reference Signal Received Power) and RSRQ (Reference Signal Received Quality), and SINR (Signal to noise and interference ratio) measurements may not change significantly from the cell center to the cell edge. Thus, the event A1/A2/A3/A4/A5/A6/B1/B2 triggered measurement report may not be sufficient as the UE may perform measurements and send a measurement report too early or too late before reaching the cell edge.

In light of the above considerations on various propagation delays of different cells and limitations of existing measurement triggering conditions, new schemes for measurement configuration and reporting are suggested in this patent document.

FIG. 1 shows a flowchart of an example method of wireless communication that is performed by a user device. As shown in FIG. 1, at operation 110, the UE receives measurement configuration information and/or measurement report triggering condition from a network device. The measurement configuration information includes measurement gap configuration and/or SMTC configuration and can be configured via system information or dedicated RRC signaling (e.g. RRCReconfiguration message or RRC release message). At operation 120, the UE performs measurements based on the measurement configuration information. At operation 130, the UE performs an evaluation for a measurement event according to the measurement triggering report triggering condition.

The measurement gap configuration and the SMTC configuration are discussed in more detail below.

### Measurement Gap Configuration

Measurement gap configurations can be performed in various manners as discussed below.

Implementation 1: A default measurement gap length (e.g. 5.5ms or 6ms) can be defined for a specific network scenario, a specific frequency, a specific cell or a specific satellite/HAPS. The examples of the specific network scenario include non-terrestrial network (NTN), air-to-ground (ATG), network served by satellites or high altitude platform station (HAPS), network served by low earth orbit (LEO)/Non-LEO satellite, network served by geostationary (GEO) /Non-GEO satellite.

Implementation 2: A value to be configured for measurement gap length can be limited for a specific network scenario, a specific frequency, a specific cell or a specific satellite/HAPS. The examples of the specific network scenario include NTN, ATG, network served by satellites or HAPS, network served by LEO/Non-LEO satellite, network served by GEO/Non-GEO satellite.

Implementation 3: A new measurement gap configuration is introduced for a specific network scenario, a specific frequency, a specific cell or a specific satellite/HAPS. The examples of the specific network scenario include NTN, ATG, network served by satellites or HAPS, network served by LEO/Non-LEO satellite, network served by GEO/Non-GEO satellite. For example, a value range of the new measurement gap configuration is extended to ensure that the length is larger than or equal to the SSB periodicity of the concerned cells in a specific network scenario (e.g. NTN, ATG, network served by satellites or HAPS, network served by LEO/Non-LEO satellite, network served by GEO/Non-GEO satellite), a specific frequency, or served by a specific satellite/HAPS.

A new measurement gap length (mgl) or measurement gap configuration (measGapConfig) can be configured for a specific network scenario (e.g. NTN, ATG, network served by satellites or HAPS, network served by LEO/Non-LEO satellite, network served by GEO/Non-GEO satellite), a specific frequency, a specific cell or a specific satellite/HAPS to ensure that the measurement gap length is large enough to cover all the possible SSB periodicity of cells in the same measurement objects.

In an example, *mgl-NTN* can be defined as follows:

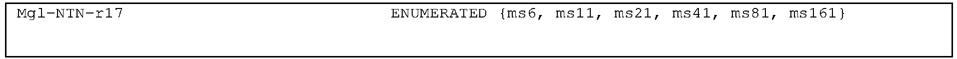

In an example, *MeasGapConfig-NTN* can be defined as follows:

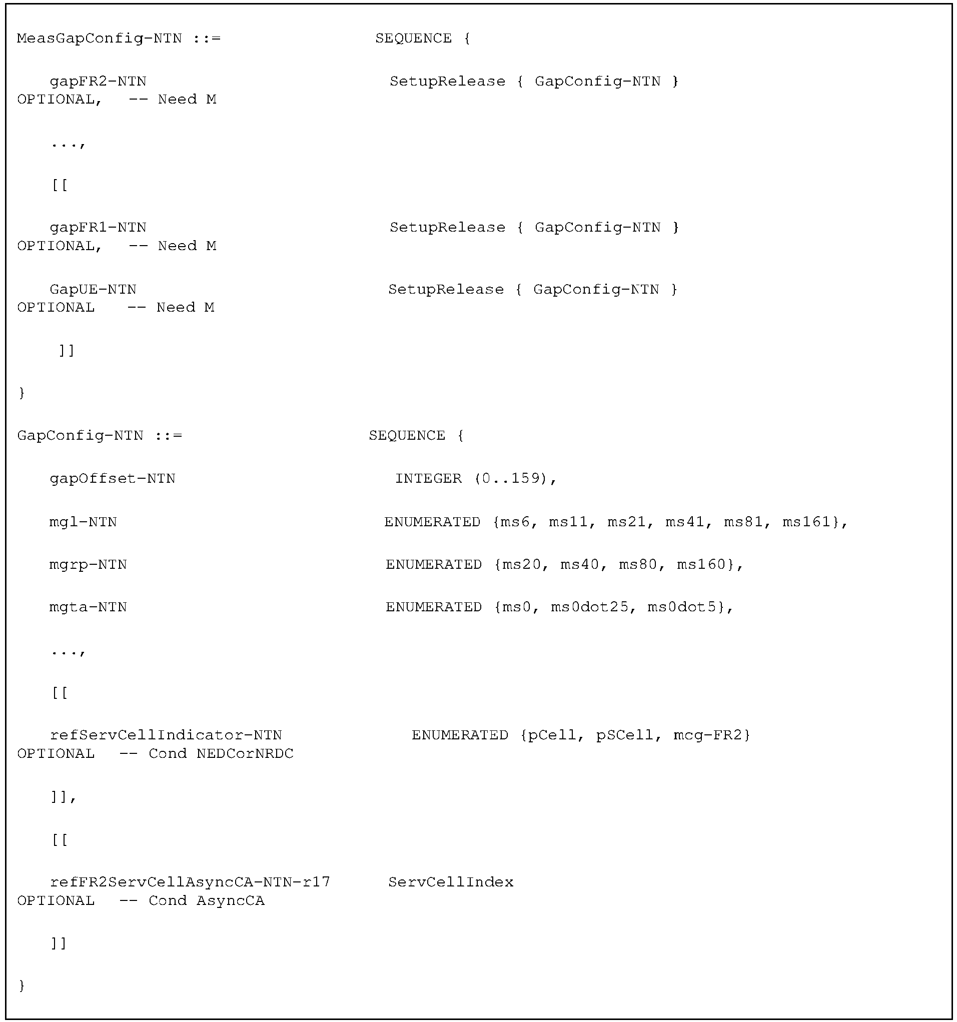

In an example, *MeasGapConfig-NeighSat* can be defined as follows:

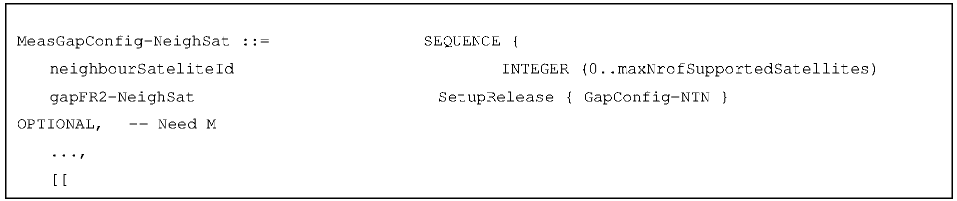

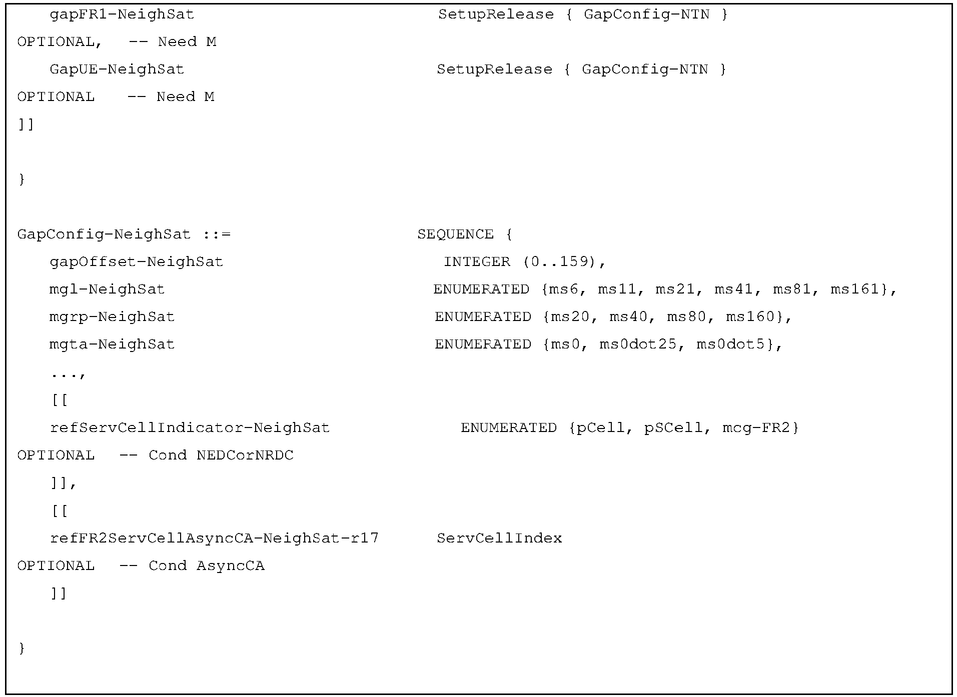

Implementation 4: An indicator is introduced to indicate whether extra compensation is needed in the measurement gap. For example, an indicator can be provided to indicate that the transmission delay or timing advance (TA) shall be used as compensation in the measurement gap, and UE may delay start of the measurement gap based on the compensation. The indicator can be configured for a certain network scenario (e.g. NTN, ATG, network served by satellites or HAPS, network served by LEO/Non-LEO satellite, network served by GEO/Non-GEO satellite), a certain cell, a certain frequency or a certain satellite/HAPS (High Altitude Platform Station).

As an example, *gapPrecompensation-r17* can be defined as follows:

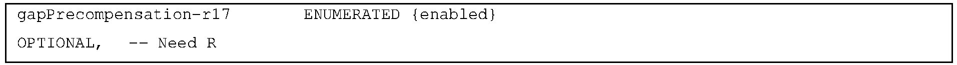

Upon receiving the *gapPrecompensation-r17,* UE will compensate for the one-way transmission delay between the UE and the satellite/HAPS/NTN GW before starting the measurement gap.

Implementation 5: An extra measurement gap offset is introduced to delay the start of measurement gap. The extra measurement gap can be configured for a specific network scenario (e.g. NTN, ATC, network served by satellites or HAPS, network served by LEO/Non-LEO satellite, network served by GEO/Non-GEO satellite), a specific frequency, a specific cell or a specific satellite/HAPS. The value of the extra measurement gap offset can be configured in one of the following options:
Option 1: The value of the extra measurement gap offset is the transmission delay between the UE and the satellite/HAPS serving the PCell or the transmission delay between UE and the satellite/HAPS serving a certain neighbor cell or cells on a certain frequency.
Option 2: The value of the extra measurement gap offset is the transmission delay between the UE and the NTN/HAPS gateway (GW) serving the PCell or the transmission delay between the UE and the NTN/HAPS GW serving a certain neighbour cell or cells on a certain frequency.
Option 3: The value of the extra measurement gap offset is the transmission delay between the satellite/HAPS and the NTN/HAPS gateway (GW) serving the PCell or the transmission delay between the satellite/HAPS and the NTN/HAPS GW serving a certain neighbour cell or cells on a certain frequency.

As an example, *extraGapOffset-r17* can be defined as follows:

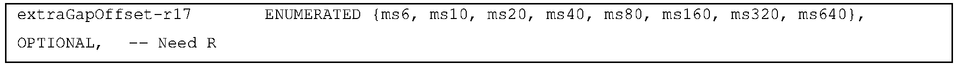

Implementation 6: An indicator is introduced to indicate that the reference timing of measurement gap is timing on satellite/HAPS serving the PCell or timing on the NTN/HAPS GW serving the PCell. The indicator can be defined and configured for a specific network scenario (e.g. NTN, ATC, network served by satellites or HAPS, network served by LEO/Non-LEO satellite, network served by GEO/Non-GEO satellite), a specific frequency, a specific cell or a specific satellite/HAPS.

Implementation 7: A start timing reference for measurement gap is introduced, which is used to indicate the start point of the measurement gap. The start timing is given by an absolute timing (e.g. a UTC time) and the time refers to the timing on the serving satellite/HAPS of PCell or on the NTN/HAPS GW of PCell. The start timing reference can be configured for a certain cell, a certain frequency or a certain satellite/HAPS (High Altitude Platform Station) in an explicit way or implicit way. The starting timing reference for a certain cell, a certain frequency, a certain satellite/HAPS (High Altitude Platform Station) or a certain network scenario can also be specified in specs with a fixed value or value range.

An example of an explicit configuring of the start time reference for measurement gap is provided below:

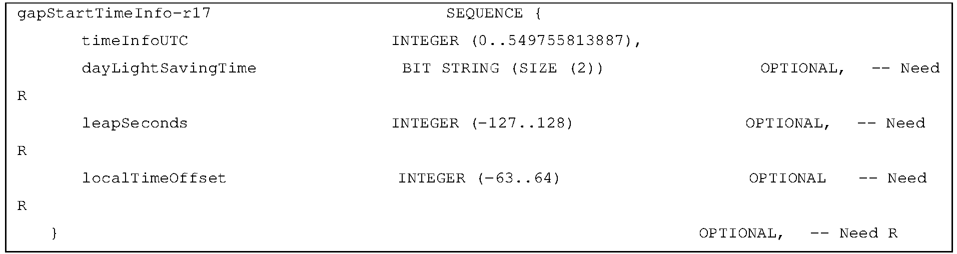

Upon receiving this *gapStartTimeInfo-r17,* UE can derive the start timing reference for measurement gap at the UE side (e.g. the gapStartTimeInfo-r17 + the transmission delay between UE and the serving satellite/HAPS of PCell or the NTN/HAPS GW of PCell).

### SMTC Configuration

SMTC configurations can be performed in various manners as discussed below.

Implementation 1: A default SMTC configuration (e.g. with default SSB periodicity 5ms) can be defined for a specific network scenario (e.g. NTN, ATC, network served by satellites or HAPS, network served by LEO/Non-LEO satellite, network served by GEO/Non-GEO satellite), a specific frequency, a specific cell or a specific satellite/HAPS.

Implementation 2: A value to be configured for SMTC configuration can be limited in a specific network scenario(e.g. NTN, ATG, network served by satellites or HAPS, network served by LEO/Non-LEO satellite, network served by GEO/Non-GEO satellite), a specific frequency, a specific cell or a specific satellite/HAPS.

Implementation 3: A new SMTC configuration is introduced for a specific network scenario (e.g. NTN, ATG, network served by satellites or HAPS, network served by LEO/Non-LEO satellite, network served by GEO/Non-GEO satellite), a specific frequency, a specific cell or a specific satellite/HAPS. For example, the value range of the new SMTC configuration is extended to ensure that the length is less than or equal to the measurement gap of the concerned cells in a network scenario (e.g. NTN, ATG, network served by satellites or HAPS, network served by LEO/Non-LEO satellite, network served by GEO/Non-GEO satellite), a specific frequency, or served by a specific satellite/HAPS.

In an example, *SSB-MTC-NeighSat* can be defined as follows:

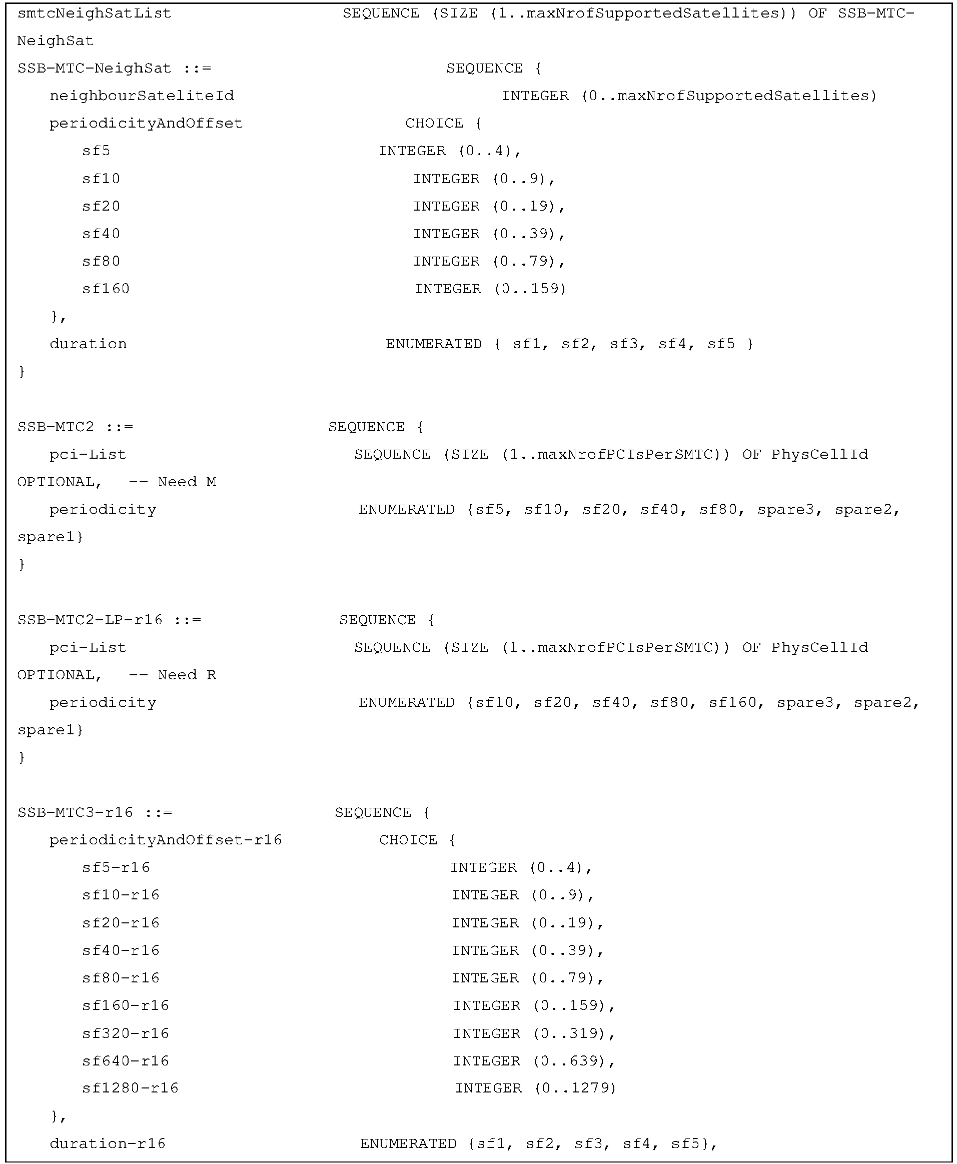

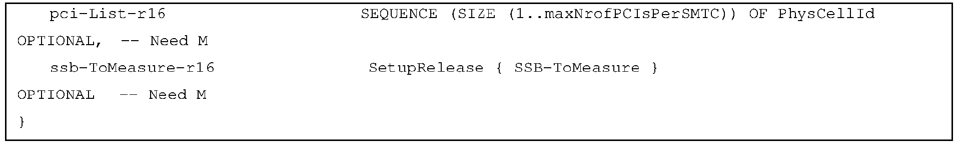

Each *SSB-MTC-NeighSat* can be identified by an index (e.g. the first *SSB-MTC-NeighSat* in the *smtcNeighSatList* is identified by index 0) can be associated with a certain frequency or a certain cell via this index.

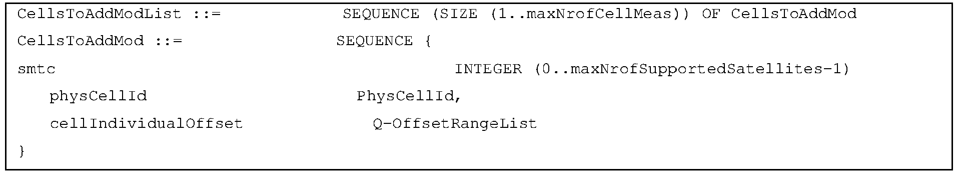

Implementation 4: An indicator is introduced to indicate whether extra compensation is needed in the SMTC. For example, an indicator can be provided to indicate that the transmission delay or timing advance (TA) shall be used as compensation in the SMTC, and the UE may delay the start of the SMTC based on the compensation. The indicator can be configured for a certain cell, a certain frequency or a certain satellite/HAPS (High Altitude Platform Station).

In the example, *smtcPrecompensation-r17* can be defined as follows:

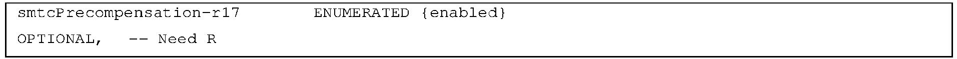

Upon receiving the *smtcPrecompensation-r17,* the UE will compensate for the transmission delay between the UE and the satellite/HAPS/NTN GW before starting the SMTC.

Implementation 5: An extra SMTC offset is introduced to delay the start of SMTC. The extra SMTC offset can be defined and configured for a specific network scenario (e.g. NTN, ATC, network served by satellites or HAPS, network served by LEO/Non-LEO satellite, network served by GEO/Non-GEO satellite), a specific frequency, a specific cell or a specific satellite/HAPS. The value of the extra SMTC offset can be configured in one of the following options:
Option 1: The value of the extra SMTC offset is the transmission delay between the UE and the satellite/HAPS serving the PCell or the transmission delay between the UE and the satellite/HAPS serving a certain neighbour cell or cells on a certain frequency.
Option 2: The value of the extra SMTC offset is the transmission delay between the UE and the NTN/HAPS gateway (GW) serving the PCell or the transmission delay between tjr UE and the NTN/HAPS GW serving a certain neighbour cell or cells on a certain frequency.
Option 3: The value of the extra SMTC offset is the transmission delay between the satellite/HAPS and the NTN/HAPS gateway (GW) serving the PCell or the transmission delay between the satellite/HAPS and the NTN/HAPS GW serving a certain neighbour cell or cells on a certain frequency.

In an example, *extraSMTCOffset-r17* can be defined as follows:

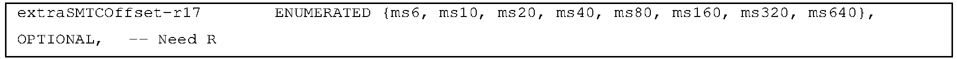

Upon receiving the *extraSMTCOffset-r17,* UE will compensate the extra offset before start the SMTC.

Implementation 6: An indicator is introduced to indicate that the reference timing of SMTC is the timing on satellite/HAPS serving the PCell or the timing on the NTN/HAPS GW serving the PCell. The indicator can be defined and configured for a specific network scenario (e.g. NTN, ATC, network served by satellites or HAPS, network served by LEO/Non-LEO satellite, network served by GEO/Non-GEO satellite), a specific frequency, a specific cell or a specific satellite/HAPS.

Implementation 7: A start timing reference for SMTC is introduced, which is used to indicate the start point of the SMTC. The start timing is given by an absolute timing (e.g. a UTC time) and the time refer to the timing on the serving satellite/HAPS of PCell or on the NTN/HAPS GW of PCell. The start timing reference can be configured for a specific network scenario (e.g. NTN, ATC, network served by satellites or HAPS, network served by LEO/Non-LEO satellite, network served by GEO/Non-GEO satellite), a specific frequency, a specific cell or a specific satellite/HAPS. The starting timing reference can also be specified in specs with a fixed value or value range.

An example of an explicit configuring of the start time reference for SMTC is provided below:

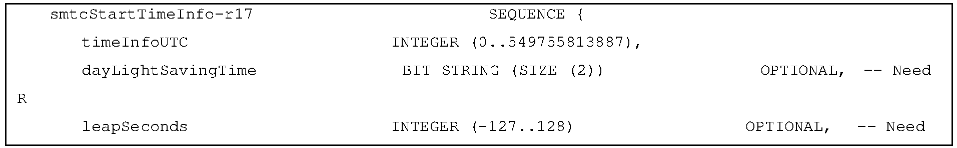

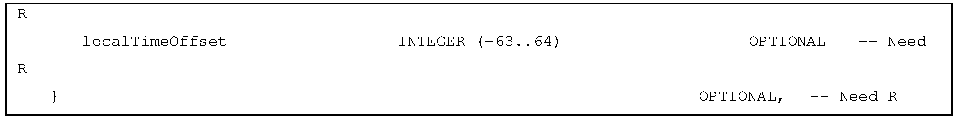

Upon receiving this *smtcStartTimeInfo-r17,* the UE can derive the start timing reference for SMTC at UE side (e.g. the *smtcStartTimeInfo-r17 +* the transmission delay between UE and the serving satellite/HAPS of PCell or the NTN/HAPS GW of PCell).

### Measurement Report Triggering Condition

In some implementations, the measurement report triggering condition can be configured as an area scope along with hysteresis or a time range along with hysteresis. The UE will perform the evaluation for the measurement event according to the configured triggering condition.

### Relative Area Scope as Measurement Report Triggering Condition

The following implementations can be considered to configure the area scope expressed as a distance between the UE and the satellite/HAPS, cell center or reference point.

Implementation 1: The area scope and the hysteresis are expressed as the relative distance between UE and the satellite/HAPS.

Implementation 2: The area scope is configured as the relative distance between UE and the center of a cell.

Implementation 3: The area scope is configured as the relative distance between UE and a configured reference point.

In an example (corresponding to Implementation 1), new *MeasTriggerQuantity, Hysteresis,* and/or *MeasTriggerQuantityOffset* are defined based on a distance between UE and the satellite/HAPS as shown below:

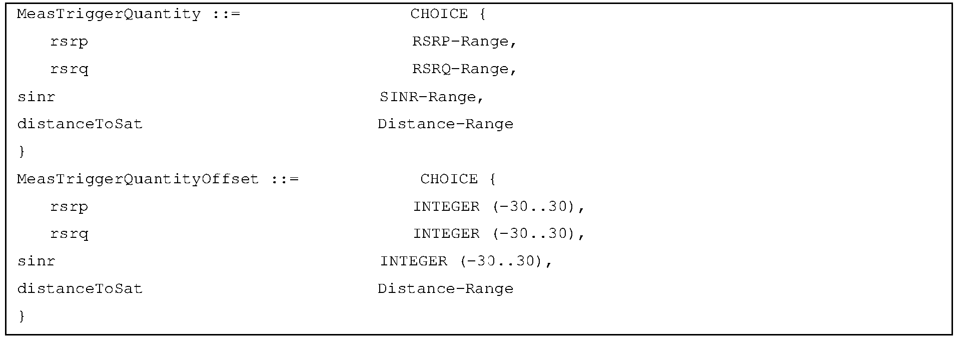

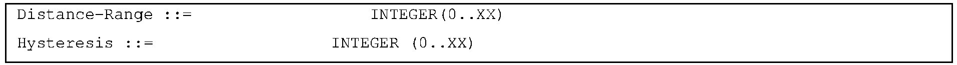

The IE Hysteresis is a parameter used within the entry and leave condition of an event triggered reporting condition. The actual value is field value * 0.5 km.

The actual value of Distance-Range is the field value * 0.5 km.

A new field indicating the coordinates or the ID of the serving or neighbouring satellites/HAPS or NTN/HAPS GW that the UE needs to evaluate the distance to will be defined and configured to UE for a specific cell, a specific network scenario (e.g. NTN, ATC, network served by satellites or HAPS, network served by LEO/Non-LEO satellite, network served by GEO/Non-GEO satellite), a specific frequency for the UE to perform measurement evaluation on.

In an example, the below indicates the satellite coordinates:

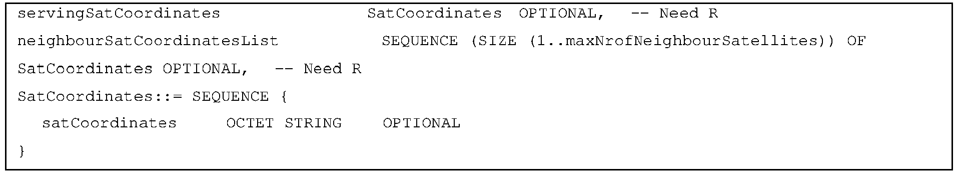

To indicate the satellite identity, the satellite/HAPS ephemeris will be provided to the UE. The coordinates of the serving or neighbouring satellites/HAPS can either be included directly in the ephemeris information or derived based on the orbital parameters in the ephemeris information. Each satellite/HAPS will be associated with an ID in the ephemeris and the satellite/HAPS ID will be configured to UE for a specific cell, a specific network scenario (e.g. NTN, ATC, network served by satellites or HAPS, network served by LEO/Non-LEO satellite, network served by GEO/Non-GEO satellite), a specific frequency for the UE to perform measurement evaluation on.

In an example (corresponding to Implementation 2), new *MeasTriggerQuantity, Hysteresis,* and/or *MeasTriggerQuantityOffset* are defined based on a distance between the UE and the center of a cell as shown below.

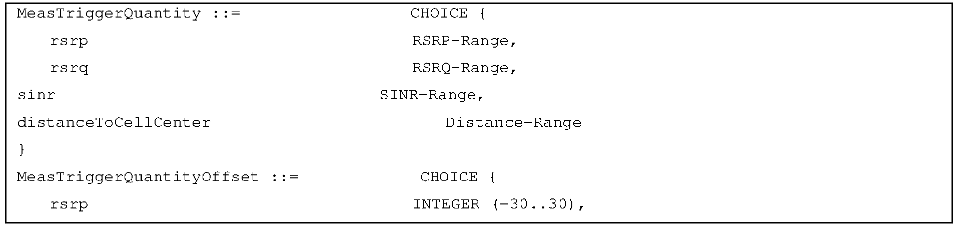

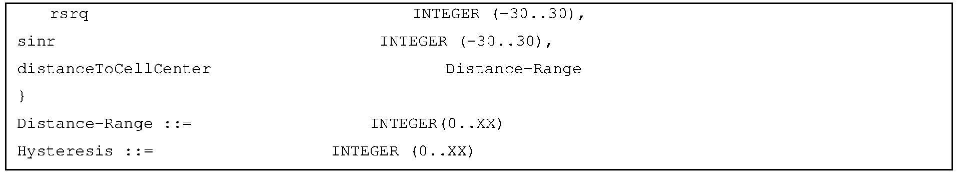

The IE Hysteresis is a parameter used within the entry and leave condition of an event triggered reporting condition. The actual value is field value * 0.5 km.

The actual value of Distance-Range is the field value * 0.5 km.

A new field indicating the coordinates of the serving or neighbouring cell center that UE needs to evaluate the distance to will be defined and configured to UE.

In an example, the below indicates the cell center coordinates:

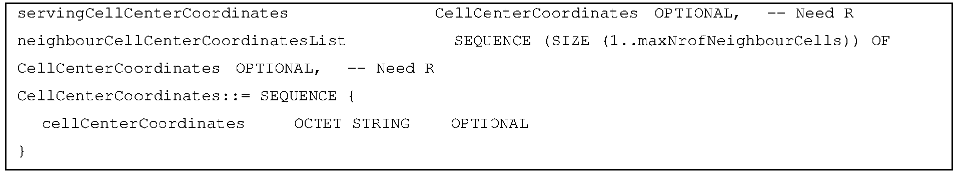

In an example (corresponding to implementation 3), new *MeasTriggerQuantity, Hysteresis,* and/or *MeasTriggerQuantityOffset* are defined based on the distance between the UE and a reference location as shown below:

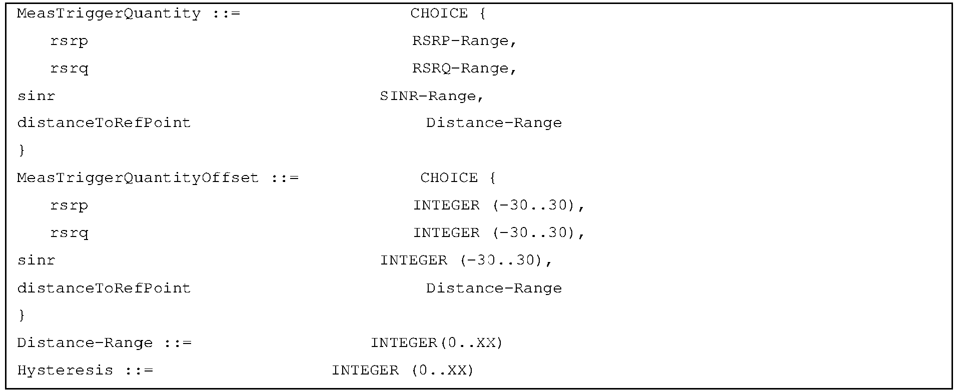

The IE Hysteresis is a parameter used within the entry and leave condition of an event triggered reporting condition. The actual value is field value * 0.5 km.

The actual value of Distance-Range is the field value * 0.5 km.

A new field indicating the coordinates of a reference point that the UE needs to evaluate the distance to will be defined and configured to the UE and the reference point can be configured for a specific cell or specific frequency.

In an example, the below indicates the cell center coordinates:

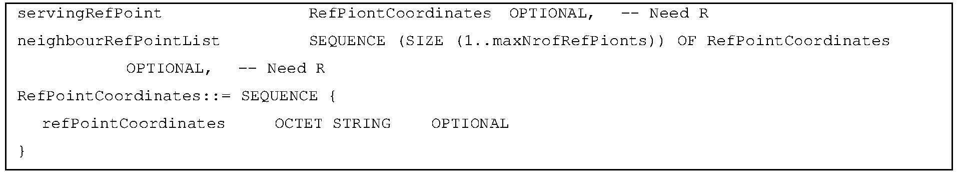

Some implementations of the disclosed technology configure measurement report triggering condition that is received from the network device. The following events can be configured to trigger measurement report:

### Event A1 (Serving becomes better than threshold):

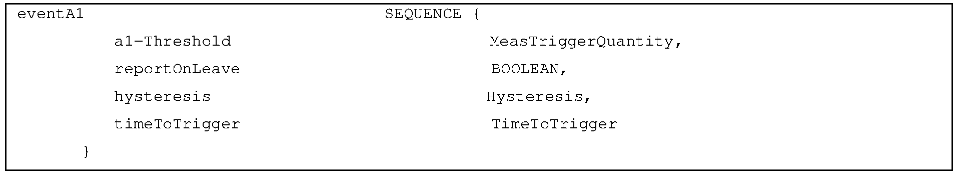

The *al-Threshold* and *hysteresis* are configured as the distance between UE and the serving satellite/HAPS, cell center or reference point.

Upon receiving the event A1, the UE shall perform at least one of following operations:
- Operation 1: The UE considers that the entering condition for this event is satisfied when the entering condition A1-1 is fulfilled. In one example, the entering condition A1-1 may correspond to: Ds - Hys > Thresh. Ds is the distance between UE and the serving satellite/HAPS, cell center or reference point, not taking into account any offsets. Hys is the hysteresis parameter for this event (i.e. hysteresis as defined within *reportConfigNR* for this event). Thresh is the threshold parameter for this event (i.e. *a1-Threshold* as defined within *reportConfigNR* for this event). In some implementations, the Ds is expressed in km, Hys is expressed in km, and Tresh is expressed in the same unit as Ds.
- Operation 2: The UE considers that the leaving condition for this event is satisfied when the leaving condition A1-2 is fulfilled. In one example, the leaving condition A1-2 may correspond to: Ds + Hys < Thresh. Ds, Hys, Tresh have been already discussed for the entering condition A1-1 above.
- Operation3: For this measurement, the UE considers the NR serving cell corresponding to the associated *measObjectNR* associated with this event.

### Event A2 (Serving becomes worse than threshold):

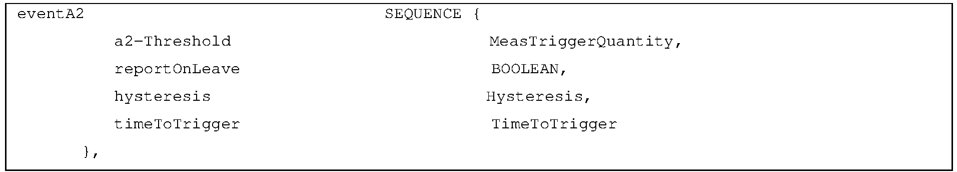

The *a2-Threshold* and *hysteresis* are configured as the distance between UE and the serving satellite/HAPS, cell center or reference point.

Upon receiving the event A2, UE shall perform at least one of following operations:
- Operation 1: The UE considers the entering condition for this event to be satisfied when the entering condition A2-1 is fulfilled. In one example, the entering condition A2-1 may correspond to: Ds + Hys > Thresh. Ds is the distance between UE and the serving satellite/HAPS, cell center or reference point, not taking into account any offsets. Hys is the hysteresis parameter for this event (i.e. hysteresis as defined within *reportConfigNR* for this event). Thresh is the threshold parameter for this event (i.e. *a2-Threshold* as defined within *reportConfigNR* for this event). In some implementations, the Ds is expressed in km, Hys is expressed in km, and Tresh is expressed in the same unit as Ds.
- Operation 2: The UE considers that the leaving condition for this event is satisfied when the leaving condition A2-2 is fulfilled. In one example, the leaving condition A2-2 may correspond to: Ds - Hys < Thresh. Ds, Hys, Tresh have been already discussed for the entering condition A2-1 above.
- Operation 3: For this measurement, consider the serving cell indicated by the *measObjectNR* associated with this event.

### Event A3 (Neighbour becomes offset better than SpCell):

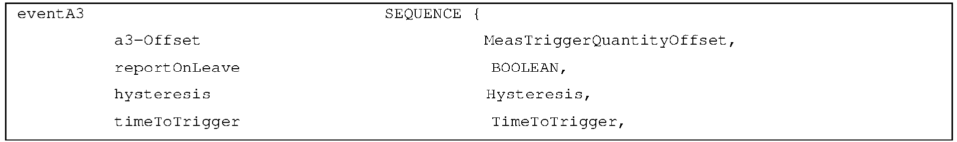

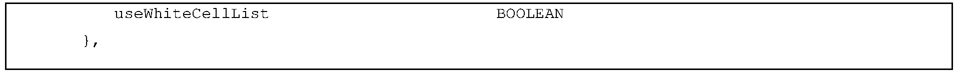

The *a3-Offset* and *hysteresis* are configured as the distance between UE and the serving satellite/HAPS, cell center or reference point.

Upon receiving the event A3, UE shall perform at least one of following operations:
- Operation 1: The UE considers the entering condition for this event to be satisfied when the entering condition A3-1 is fulfilled. In one example, the entering condition A2-1 may correspond to: Dn + Ofn + Ocn - Hys > Dp + Ofp + Ocp + Off. The variables in the formula are defined as follows:
   Dn is the distance between UE and the neighbour satellite/HAPS, cell center or reference point, not taking into account any offsets.

Ofn is the measurement object specific offset of the reference signal of the neighbour cell (i.e. offsetMO as defined within measObjectNR corresponding to the neighbour cell).

Ocn is the cell specific offset of the neighbour cell (i.e. cellIndividualOffset as defined within measObjectNR corresponding to the frequency of the neighbour cell), and set to zero if not configured for the neighbour cell.

Dp is the distance between UE and the serving satellite/HAPS, cell center or reference point, not taking into account any offsets.

Ofp is the measurement object specific offset of the SpCell (i.e. offsetMO as defined within measObjectNR corresponding to the SpCell).

Ocp is the cell specific offset of the SpCell (i.e. cellIndividualOffset as defined within measObjectNR corresponding to the SpCell), and is set to zero if not configured for the SpCell.

Hys is the hysteresis parameter for this event (i.e. hysteresis as defined within reportConfigNR for this event).

Off is the offset parameter for this event (i.e. a3-Offset as defined within reportConfigNR for this event).

Dn and Dp are expressed in km in case of Distance.

Ofn, Ocn, Ofp, Ocp, Hys, Off are expressed in km.
- Operation 2: The UE considers the leaving condition for this event to be satisfied when the leaving condition A3-2 is fulfilled. In one example, the leaving condition A3-2 may correspond to: Dn + Ofn + Ocn + Hys < Dp + Ofp + Ocp + Off. The variables in the formula have been already discussed for the entering condition A3-1.
- Operation 3: The UE uses the SpCell for Dp, Ofp and Ocp.

### Event A4 (Neighbour becomes better than threshold):

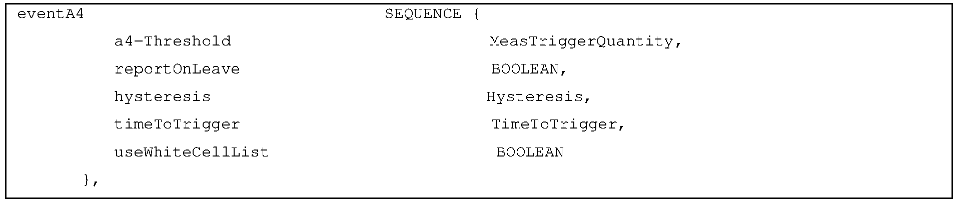

The *a4-Threshold* and *hysteresis* are configured as the distance between UE and the serving satellite/HAPS, cell center or reference point.

Upon receiving the event A4, the UE shall perform at least one of following operations:
- Operation 1: The UE considers the entering condition for this event to be satisfied when the entering condition A4-1 is fulfilled. In one example, the entering condition A4-1 may correspond to: Mn + Ofn + Ocn - Hys > Thresh. The variables in the formula are defined as follows:
   Mn is the distance between UE and the neighbour satellite/HAPS, cell center or reference point, not taking into account any offsets.

Ofn is the measurement object specific offset of the neighbour cell (i.e. offsetMO as defined within measObjectNR corresponding to the neighbour cell).

Ocn is the measurement object specific offset of the neighbour cell (i.e. cellIndividualOffset as defined within measObjectNR corresponding to the neighbour cell), and set to zero if not configured for the neighbour cell.

Hys is the hysteresis parameter for this event (i.e. hysteresis as defined within reportConfigNR for this event).

Thresh is the threshold parameter for this event (i.e. a4-Threshold as defined within reportConfigNR for this event).

Mn is expressed in km in case of Distance.

Ofn, Ocn, Hys are expressed in km.

Thresh is expressed in the same unit as Mn.
- Operation 2: The UE considers the leaving condition for this event to be satisfied when the leaving condition A4-2 is fulfilled. In one example, the leaving condition A4-2 may correspond to: Mn + Ofn + Ocn + Hys < Thresh. The variables in the formula have been already discussed for the entering condition A4-1.

### Event A5 (SpCell becomes worse than threshold1 and neighbour becomes better than threshold2):

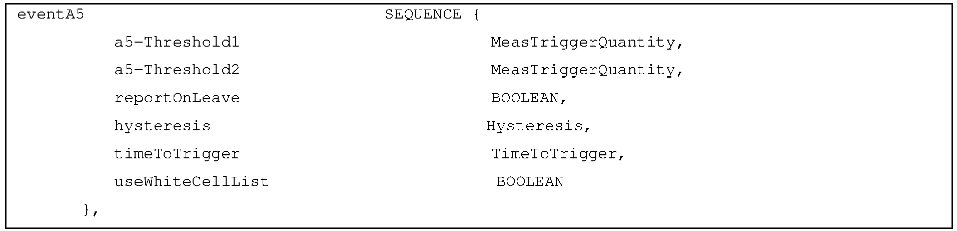

The *a5-Threshold1, a5-Threshold2* and *hysteresis* are configured as the distance between the UE and the serving satellite/HAPS, cell center or reference point.

Upon receiving the event A5, the UE shall perform at least one of following operations:
- Operation 1: The UE considers the entering condition for this event to be satisfied when both conditions A5-1 and A5-2 are fulfilled. In one example, the entering conditions A5-1 and A5-2 may correspond to: Mp + Hys < Thresh1 and Mn + Ofn + Ocn - Hys > Thresh2, respectively. The variables in the formula are defined as follows:
   Mp is the distance between UE and the serving satellite/HAPS, cell center or reference point, not taking into account any offsets.

Mn is the distance between UE and the neighbour satellite/HAPS, cell center or reference point, not taking into account any offsets.

Ofn is the measurement object specific offset of the neighbour cell (i.e. offsetMO as defined within measObjectNR corresponding to the neighbour cell).

Ocn is the cell specific offset of the neighbour cell (i.e. cellIndividualOffset as defined within measObjectNR corresponding to the neighbour cell), and set to zero if not configured for the neighbour cell.

Hys is the hysteresis parameter for this event (i.e. hysteresis as defined within reportConfigNR for this event).

Thresh1 is the threshold parameter for this event (i.e. a5-Threshold1 as defined within reportConfigNR for this event).

Thresh2 is the threshold parameter for this event (i.e. a5-Threshold2 as defined within reportConfigNR for this event).

Mn, Mp are expressed in km in case of Distance.

Ofn, Ocn, Hys are expressed in km.

Thresh1is expressed in the same unit as Mp.

Thresh2 is expressed in the same unit as Mn.
- Operation 2: The UE considers the leaving condition for this event to be satisfied when both conditions A5-3 and A5-4 are fulfilled. In one example, the entering conditions A5-3 and A5-4 may correspond to: Mp + Hys > Thresh1 and Mn + Ofn + Ocn - Hys < Thresh2, respectively. The variables in the formula have been already discussed for the entering conditions above.
- Operation 3: The UE uses the SpCell for *Mp.*

### Event A6 (Neighbour becomes offset better than SCell):

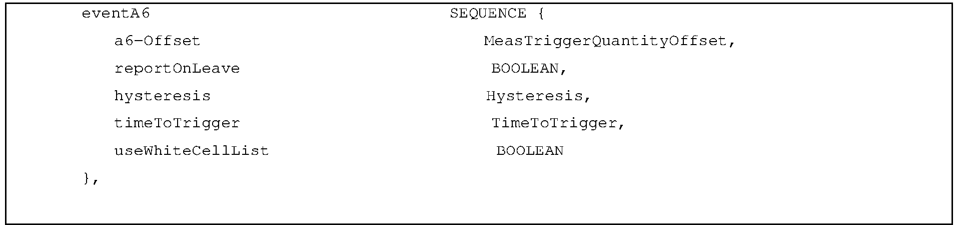

The *a6-Offset* and *hysteresis* are configured as the distance between the UE and the serving satellite/HAPS, cell center or reference point.

Upon receiving the event A4, UE shall perform at least one of following operations:
- Operation 1: The UE considers the entering condition for this event to be satisfied when the entering condition A6-1 is fulfilled. In one example, the entering condition A6-1 may correspond to: Mn + Ocn - Hys > Ms + Ocs + Off. The variables in the formula are defined as follows:
   Mn is the distance between UE and the neighbour satellite/HAPS, cell center or reference point, not taking into account any offsets.

Ocn is the cell specific offset of the neighbour cell (i.e. cellIndividualOffset as defined within the associated measObjectNR), and set to zero if not configured for the neighbour cell.

Ms is the distance between UE and the serving satellite/HAPS, cell center or reference point, not taking into account any offsets.

Ocs is the cell specific offset of the serving cell (i.e. cellIndividualOffset as defined within the associated measObjectNR), and is set to zero if not configured for the serving cell.

Hys is the hysteresis parameter for this event (i.e. hysteresis as defined within reportConfigNR for this event).

Off is the offset parameter for this event (i.e. a6-Offset as defined within reportConfigNR for this event).

Mn, Ms are expressed in km in case of Distance.

Ocn, Ocs, Hys, Off are expressed in km.
- Operation 2: The UE considers the leaving condition for this event to be satisfied when the leaving condition A6-2 is fulfilled. In one example, the leaving condition A6-2 may correspond to: Mn + Ocn - Hys < Ms + Ocs + Off. The variables in the formula have been already discussed for the entering condition A4-1.
- Operation 3: For this measurement, the UE considers the (secondary) cell corresponding to the *measObjectNR* associated with this event to be the serving cell.

### Absolute Area Scope as Measurement Report Triggering Condition

The following implementations can be considered to configure an absolute area scope as measurement report triggering condition.

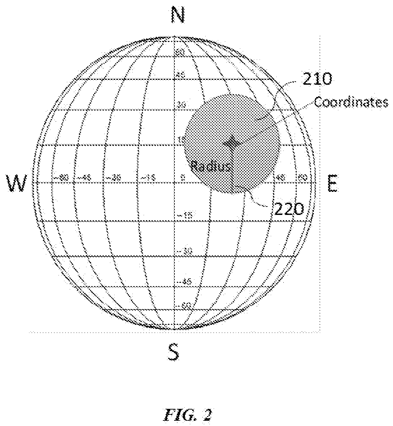

Implementation 1: The area scope can be expressed as a single reference location (represented by location coordinates) and a radius associated with the reference location. FIG. 2 shows an example of the area scope 210 that is expressed as a reference location using a radius 220 associated with the reference location.

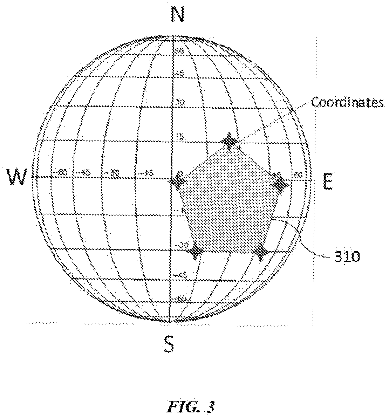

Implementation 2: The area scope can be expressed with a list of location coordinates. FIG. 3 shows an example of the area scope 310 that is expressed as reference locations.

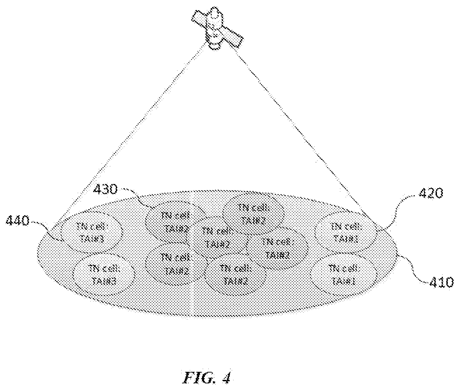

Implementation 3: The area scope can be expressed with a list of tracking area identifiers (TAIs) of terrestrial network (TN) cells. The TAI includes PLMN ID and tracking area code (TAC)) FIG. 4 shows an example of the area scope 410 that is expressed as a list of TAIs of TN cells. In FIG. 4, a list of TAIs of TN cells (e.g. TAI#1 420 and TAI#3 440) are located around TN Cells (TAI#2 430) and can be configured to represent the cell edge of the serving non-terrestrial network (NTN) cell.

Implementation 4: The area scope can be expressed as two pairs of high and low thresholds for longitude and latitude. In some other implementations, the area scope can be expressed with a low or high threshold along with a offset for longitude and latitude.

### Example of Implementation 1:

The following *LocationTriggerConfig* can be introduced and configured to UE:

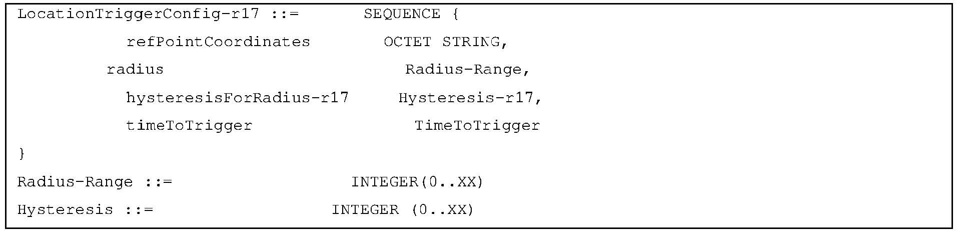

The IE Hysteresis is a parameter used within the entry and leave condition of the location triggered reporting condition. The actual value is field value * 0.1 km.

The actual value for the Radius-Range is the field value *0.5 km.

### Example of Implementation 2:

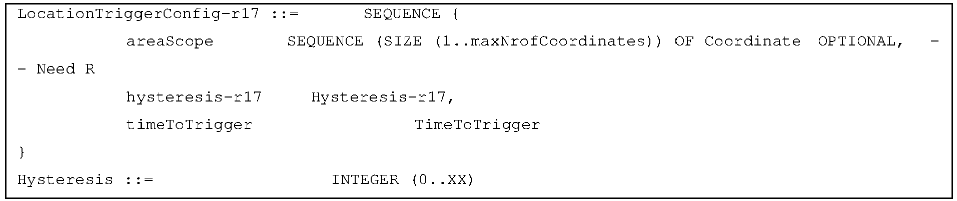

The IE Hysteresis is a parameter used within the entry and leave condition of an location triggered reporting condition. The actual value is field value * 0.5 km.

### Example of Implementation 3:

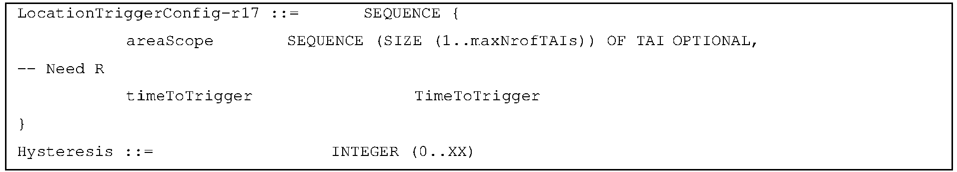

The *LocationTriggerConfig* can be configured for the serving cell/frequency or the neighbour cell/frequency. UE send measurement report when it is in or out of the configured area scope.

### Implementation Example 4:

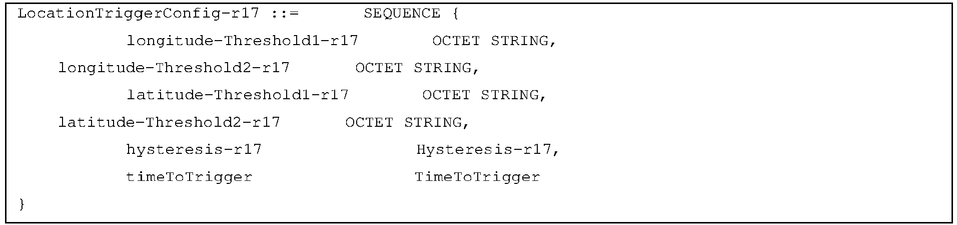

The IE Hysteresis is a parameter used within the entry and leave condition of an location triggered reporting condition. The actual value is field value * 0.5 km.

The LocationTriggerConfig can be configured for the serving cell/frequency or the neighbour cell/frequency. The UE can send a measurement report when one or more of the following event happens:
Event 1: UE is in the area scope configured for the serving cell/frequency.
Event 2: UE is out of the area scope configured for the serving cell/frequency.
Event 3: UE is in the area scope configured for the neighbour cell/frequnecy.
Event 4: UE is out of the area scope configured for the serving cell/frequency and is in the area scope configured for the neighbour cell/frequency.

Implementation example 5: New *MeasTriggerQuantity, Hysteresis,* and/or *MeasTriggerQuantityOffset* based on the area scope are defined.

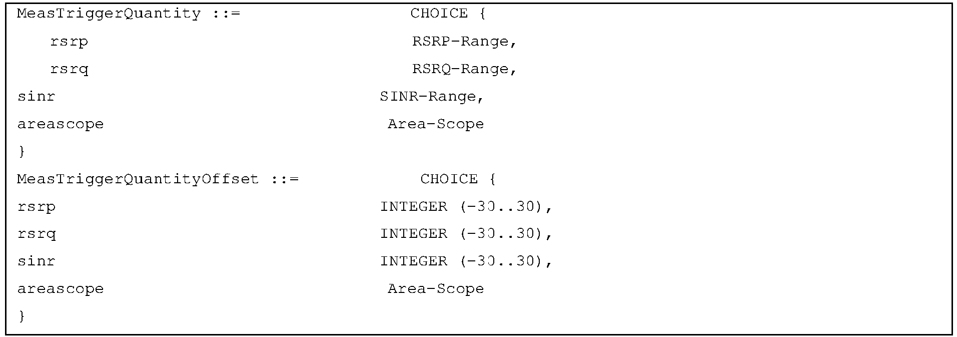

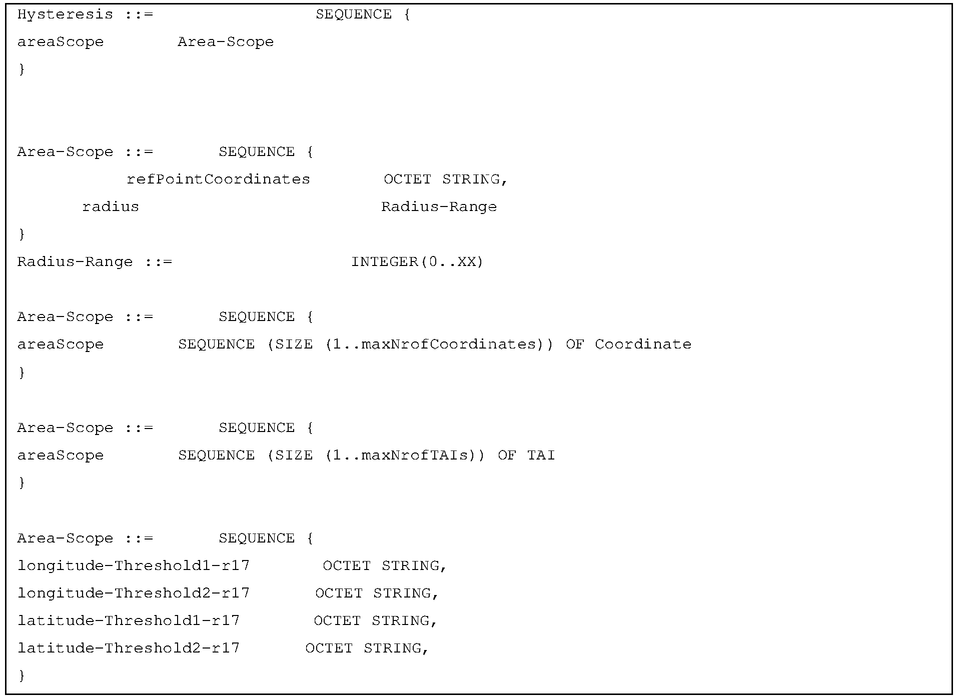

The *MeasTriggerQuantity, Hysteresis,* and/or *MeasTriggerQuantityOffset* based on the area scope can be configured in the following events that triggers measurement report:
Event A1: Serving becomes better than absolute threshold.
Event A2: Serving becomes worse than absolute threshold.
Event A3: Neighbour becomes amount of offset better than PCell/PSCell.
Event A4: Neighbour becomes better than absolute threshold.
Event A5: PCell/PSCell becomes worse than absolute threshold1 AND Neighbour/SCell becomes better than another absolute threshold2.
Event A6: Neighbour becomes amount of offset better than SCell.
Event B1: Neighbour becomes better than absolute threshold.
Event B2: PCell becomes worse than absolute threshold1 AND Neighbour becomes better than another absolute threshold2.

### Time Range along with hysteresis as Measurement Report Triggering Condition

In some implementations, the measurement report triggering condition can be configured as a time range along with hysteresis. Examples of the time range configured are discussed in the below.

### Implementation Example 1:

The time range is configured as two thresholds (upper bound and lower bound) of UTC time.

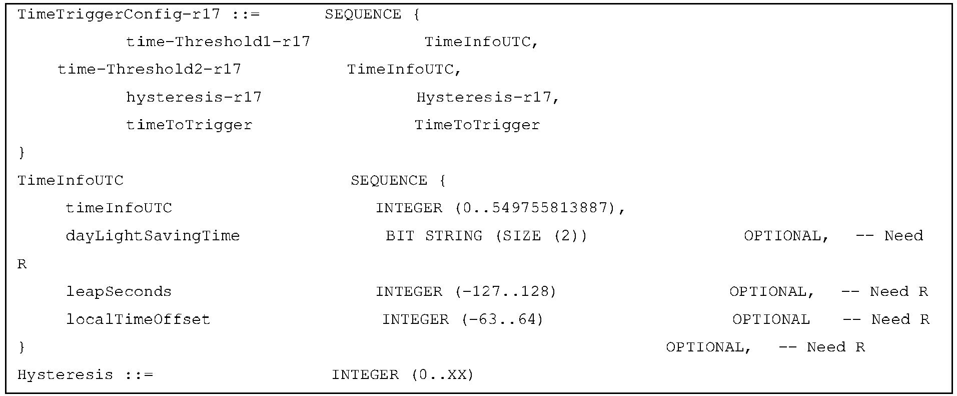

The IE Hysteresis is a parameter used within the entry and leave condition of an location triggered reporting condition. The actual value is field value * 0.1 ms.

### Implementation Example 2:

The time range is configured as a start time and a duration.

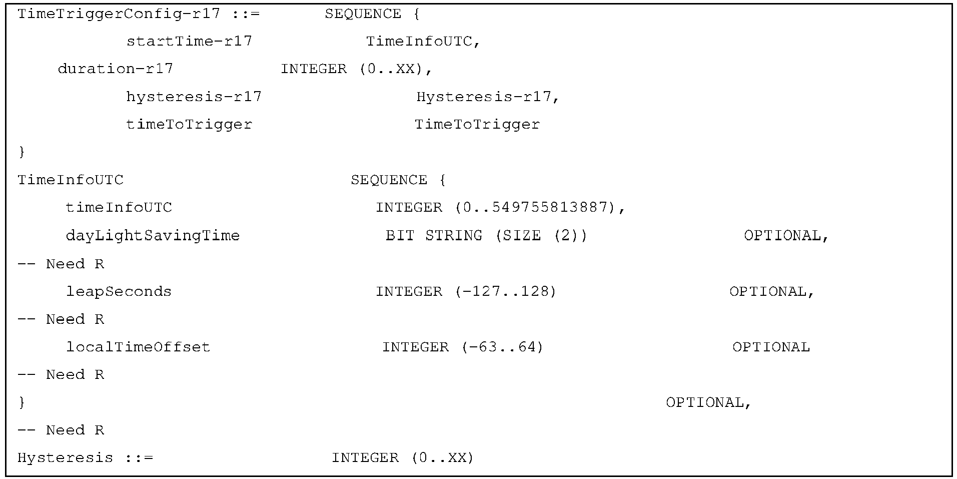

The IE Hysteresis is a parameter used within the entry and leave condition of an location triggered reporting condition. The actual value is field value * 0.1 ms.

### The actual value for duration-r17 is the field value*0.5ms.

The TimeTriggerConfig can be configured for the serving cell/frequency or the neighbour cell/frequency. UE send measurement report when one or more of the following event happens:
Event 1: UE is in the time range configured for the serving cell/frequency.
Event 2: UE is out of the time range configured for the serving cell/frequency.
Event 3: UE is in the time range configured for the neighbour cell/frequnecy.
Event 4: UE is out of the time range configured for the serving cell/frequency and is in the time range configured for the neighbour cell/frequency.

### Implementation Example 3:

New *MeasTriggerQuantity, Hysteresis,* and/or *MeasTriggerQuantityOffset* based on the time range are defined.

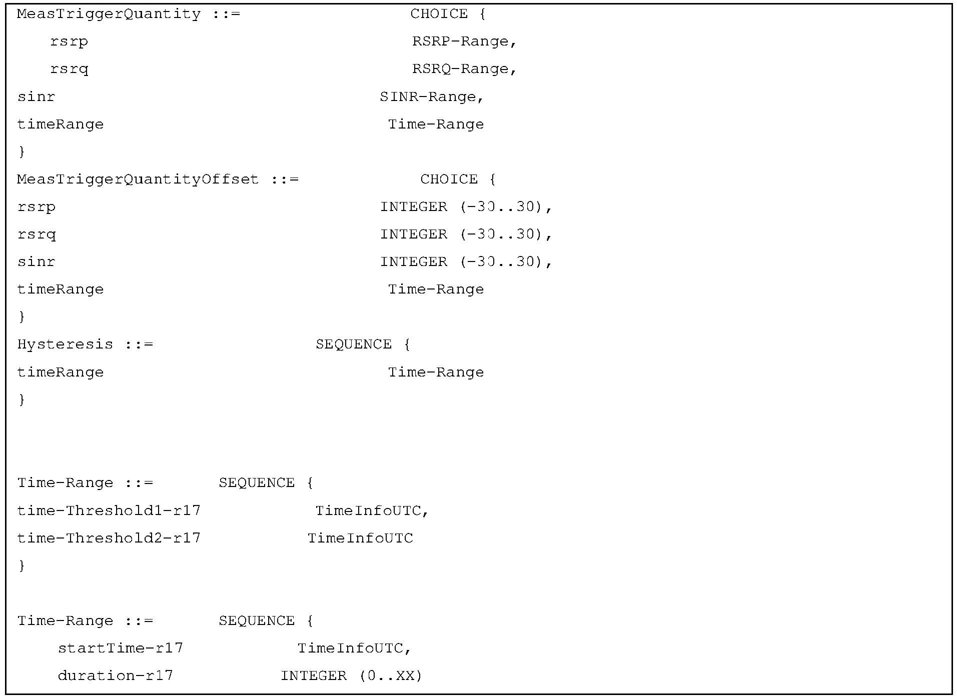

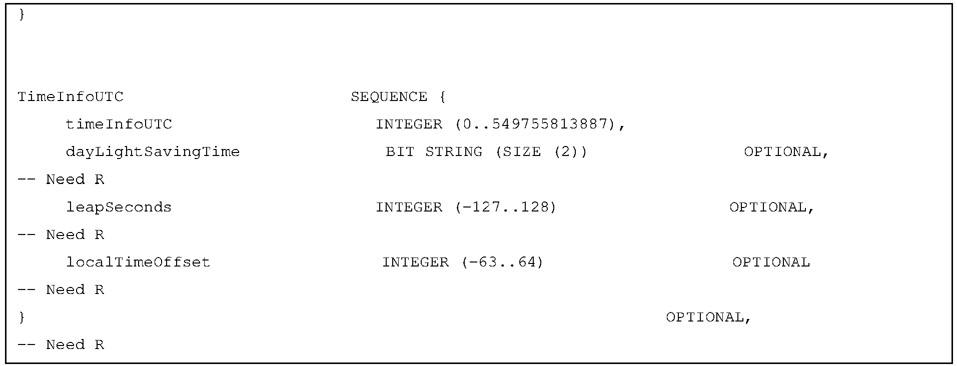

The actual value for duration-r17 is the field value*0.5ms.

The *MeasTriggerQuantity, Hysteresis,* and/or *MeasTriggerQuantityOffset* based on the time range can be configured in the following events that triggers measurement report:
Event A1: Serving becomes better than absolute threshold.
Event A2: Serving becomes worse than absolute threshold.
Event A3: Neighbour becomes amount of offset better than PCell/PSCell.
Event A4: Neighbour becomes better than absolute threshold.
Event A5: PCell/PSCell becomes worse than absolute threshold1 AND Neighbour/SCell becomes better than another absolute threshold2.
Event A6: Neighbour becomes amount of offset better than SCell.
Event B1: Neighbour becomes better than absolute threshold.
Event B2: PCell becomes worse than absolute threshold1 AND Neighbour becomes better than another absolute threshold2.

### Measurement report triggering condition as area scope or time range that can be configured per UE or per measurement object (MO)

The measurement report triggering condition as an area scope or time range can be configured per UE or per measurement object (MO). The measurement report triggering condition as an area scope or time range can be configured per UE in MeasConfig.

The following implementations can be considered when configuring the measurement report triggering condition as an area scope or time range per MO:
Implementation 1: New report type "locationTriggered" or "timeTriggered" is introduced in, for example, Report ConfigNR.
Implementation 2: The area scope or time range is introduced as an additional report condition in, for example, ReportConfigNRExt-r17.
Implementation 3: The area scope or time range is introduced as an additional event for the event triggered measurement report in, for example, EventTriggerConfig.

The following examples can be considered for the per UE configuration.

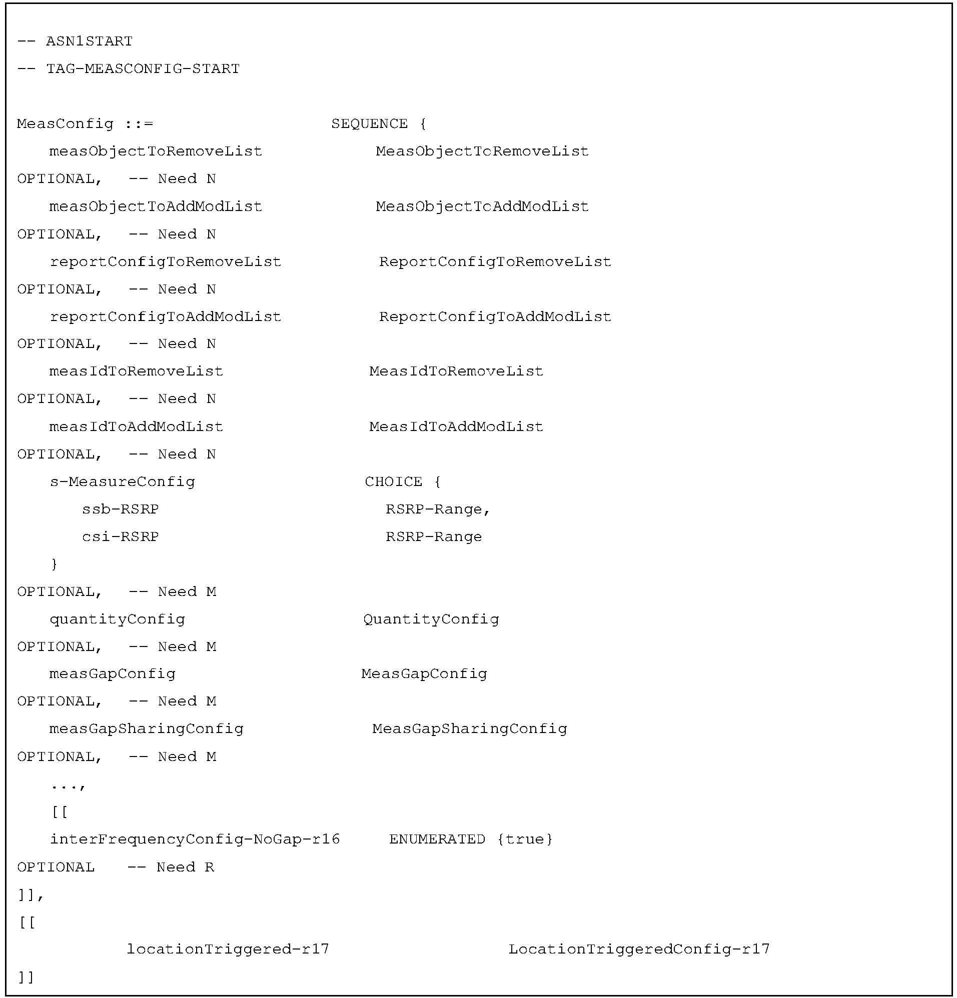

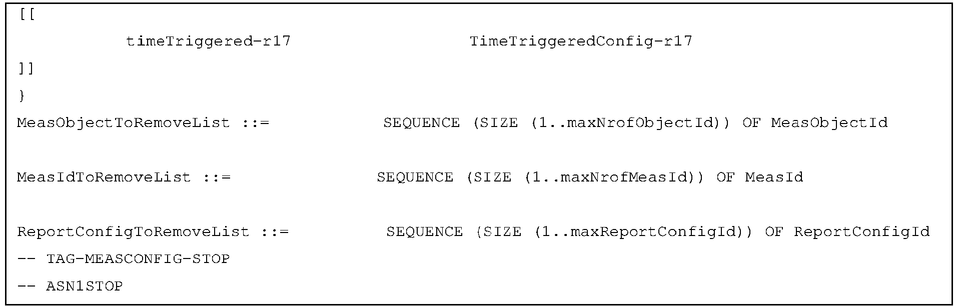

The following examples can be considered for the per MO configuration.

### Example 1 (Corresponding to Implementation 1 that introduces a new report type "locationTriggered.")

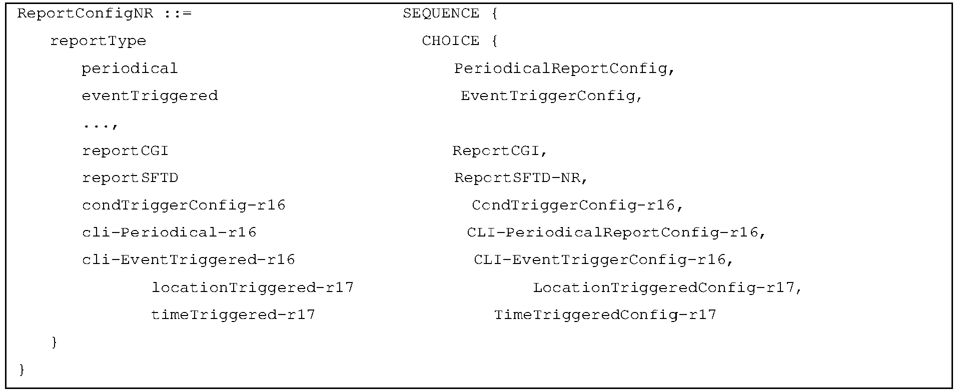

### Example 2 (Corresponding to Implementation 2 that introduces the area scope as an additional report configuration.)

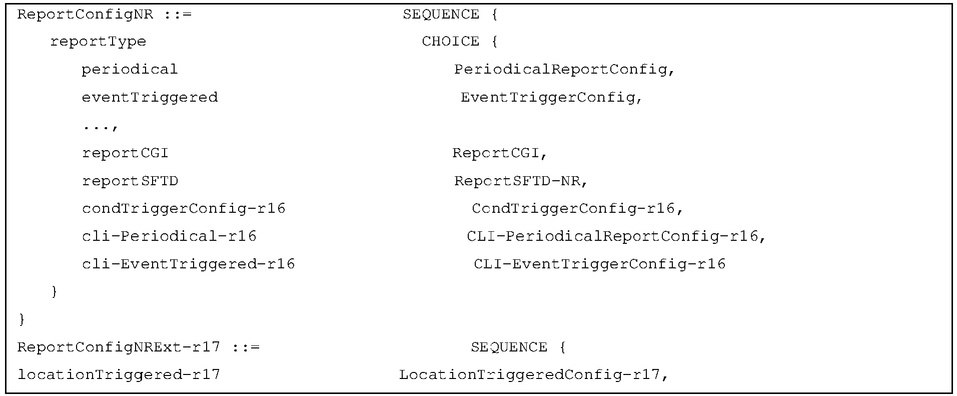

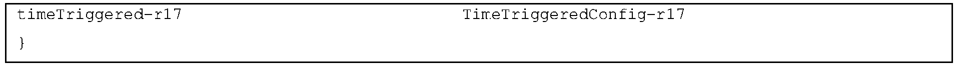

### Example 3 (Corresponding to Implementation 3 that introduces the area scope as an additional event triggered measurement report)

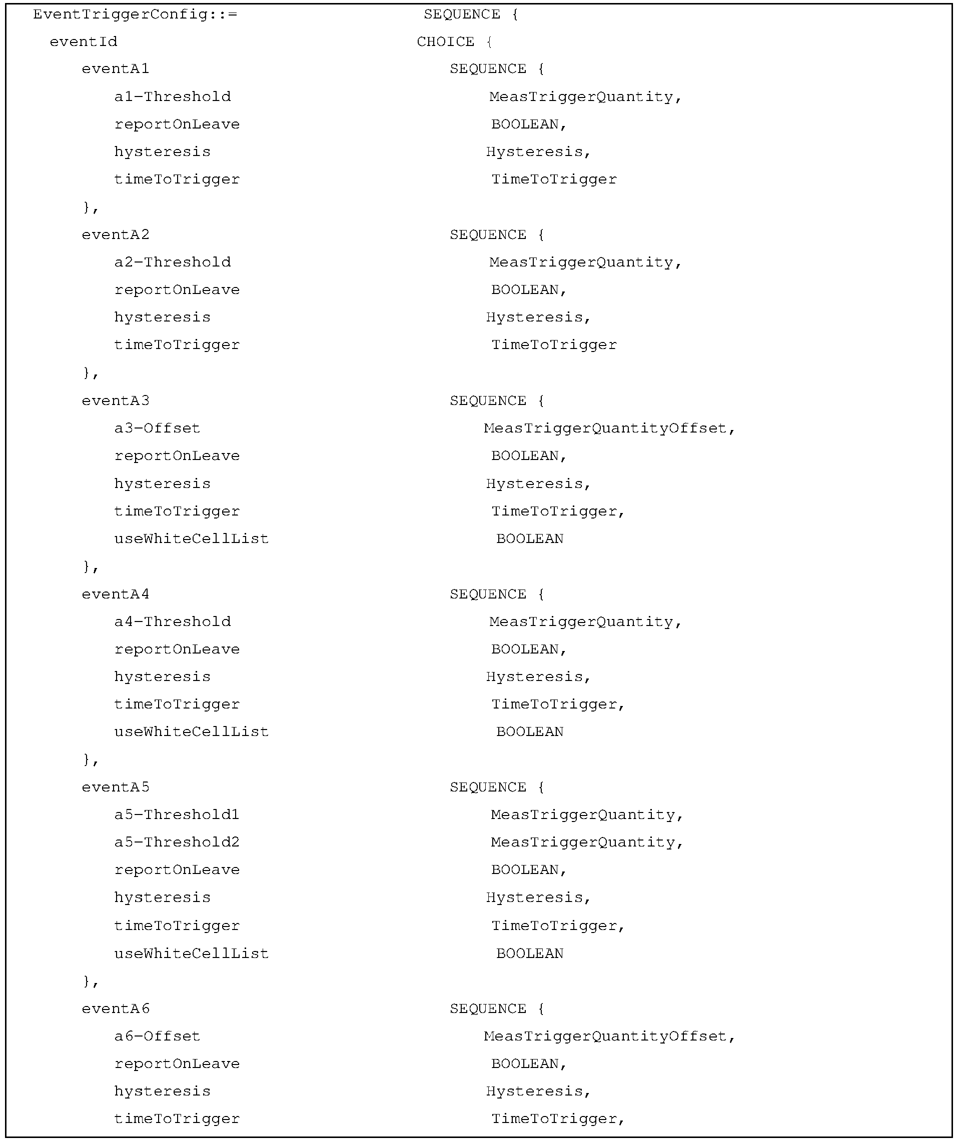

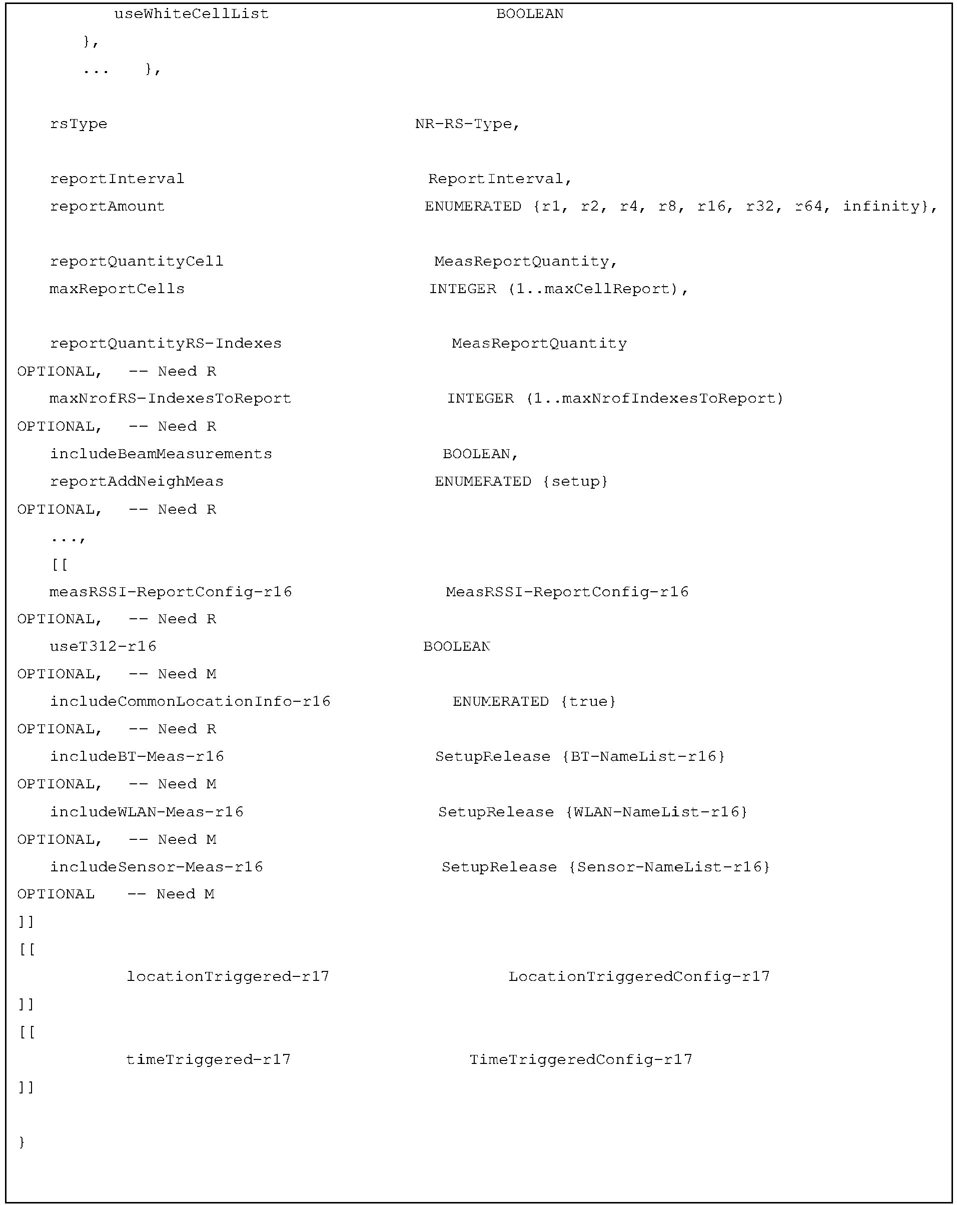

### Relationship Between Measurement Report Triggering Condition as Area Scope or Time Range and Other measurement Reporting Triggering Conditions

The relationship between the measurement report triggering condition as an area scope and the periodical measurement report triggering condition or the triggering condition based on RSRP/RSRQ/SINR will be discussed.

Implementation 1: The measurement report triggering condition as an area scope or time range is configured separately from the periodical measurement report triggering condition or the triggering condition based on RSRP/RSRQ/SINR. When the measurement report triggering condition as an area scope or time range is configured for a UE or a measurement object, neither the periodical measurement report triggering condition nor the triggering condition based on RSRP/RSRQ/SINR shall be configured.

Implementation 2: The measurement report triggering condition as an area scope or time range is configured together with the periodical measurement report triggering condition or the triggering condition based on RSRP/RSRQ/SINR.

Option 2-1: The measurement report triggering condition as an area scope is configured together with the periodical measurement report triggering condition.

Option 2-1-1: UE triggers measurement report when both the measurement report triggering condition as an area scope or time range and the periodical measurement report triggering condition is satisfied. Thus, UE only sends periodical measurement report when UE is in the configured area scope or time range or out of the configured area or time range.

Option 2-1-2: UE triggers measurement report when either the measurement report triggering condition as an area scope or time range and the periodical measurement report triggering condition is satisfied.

Option 2-2: The measurement report triggering condition as an area scope or time range is configured together with the the triggering condition based on RSRP/RSRQ/SINR.

Option 2-2-1: UE triggers measurement report when both of the measurement report triggering condition as an area scope or time range and the triggering condition based on RSRP/RSRQ/SINR is satisfied.
- Example 1: UE triggers measurement report when the triggering condition based on RSRP/RSRQ/SINR is satisfied and UE moves in or out of the configured area or time range.
- Example 2: UE triggers measurement report when UE is in or out of the configured area or time range and the triggering condition based on RSRP/RSRQ/SINR is satisfied.

Option 2-2-2: UE triggers measurement report when either of the measurement report triggering condition as an area scope or time range and the triggering condition based on RSRP/RSRQ/SINR is satisfied.

Option 2-3: The measurement report triggering condition as an area scope or time range is configured together with the triggering condition based on RSRP/RSRQ/SINR and the periodical measurement report triggering condition.

Option 2-3-1: UE triggers measurement report when all of the measurement report triggering condition as an area scope or time range, the triggering condition based on RSRP/RSRQ/SINR and the periodical measurement report triggering condition is satisfied.

Option 2-3-2: UE triggers measurement report when one of the measurement report triggering condition as an area scope or time range, the triggering condition based on RSRP/RSRQ/SINR, and the periodical measurement report triggering condition is satisfied.

The triggering condition based on RSRP/RSRQ/SINR, the triggering condition based on area scope, and/or triggering condition based on time range mentioned above can be configured for the serving cell/frequency and/or the neighbouring cell/frequency. The triggering condition configured for a certain frequency can be evaluated base on the best cell in this frequency.

### Relationship Between Measurement Report Triggering Condition as Area Scope and Measurement Report Triggering Condition as time range.

Measurement report triggering condition as area scope and measurement report triggering condition as time range can be configured together for the same UE, measurement object, cell or frequency. The measurement report will be sent when all the triggering conditions are satisfied or any one from them is satisfied. In the measurement report, UE may report the event or condition or type of the triggering event (e.g. location based, time based, RSRP/RSRQ/SINR based or periodical) that triggers this report, e.g. when multiple measurement triggering events or conditions have been configured.

When different types of triggering conditions (e.g. location based, time based, periodical and RSRP/RSRQ/SINR based) are configured together for the same UE, measurement object, cell or frequency, they can be configured as one combined event. For example, the following event can be configured:
Event 1: UE is in the configured scope of the serving cell and the RSRP of the serving cell is larger than a threshold.

Multiple types of triggering conditions can also be configured as separate events. For example, the following events have been defined and UE triggers the measurement report when all of them are satisfied or any one from them is satisfied:
Event 2: UE is in the configured scope of the serving cell.
Event 3: The RSRP of the serving cell is larger than a threshold.
Event 4: UE is in the time range configured for the serving cell.

The triggering condition expressed as area scope or time range can also be configured as execution condition for conditional handover (CHO). It may be configured together with the existing CHO execution condition (i.e. A3 or A5, A3+A3, A3+A5, A5+A5). UE performs CHO when all the configured execution conditions are satisfied.

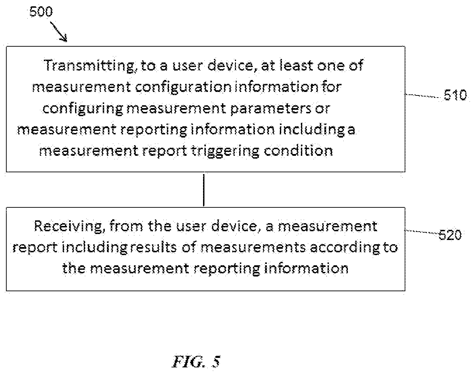

The implementations and examples of the wireless communication method disclosed above can facilitate measurement information reporting. FIG. 5 shows an example method for a measurement configuration and reporting based on some implementations of the disclosed technology. The method 500 is performed by a network device. At 510, the network device transmits, to a user device, at least one of measurement configuration information for configuring measurement parameters or measurement reporting information including a measurement report triggering condition. In some implementations, at least one of the measurement configuration information and the measurement reporting information is included in a system information or a dedicated radio resource control signaling. In some implementations, the measurement configuration information includes at least one of measurement gap configuration or SMTC (SSB based measurement timing configuration) configuration for a specific network scenario, a specific frequency, a specific cell or a specific satellite/ high altitude platform station (HAPS). In some implementations, the specific network scenario includes non-terrestrial network (NTN), air-to-ground (ATG), network served by satellites or high altitude platform station (HAPS), network served by low earth orbit (LEO)/Non-LEO satellite or network served by geostationary (GEO)/Non-GEO satellite. At 520, the network device receives, from the user device, a measurement report including results of measurements according to the measurement reporting information.

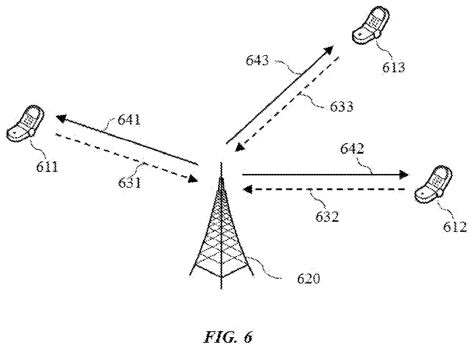

The implementations as discussed above will apply to a wireless communication. FIG. 6 shows an example of a wireless communication system (e.g., a 5G or NR cellular network) that includes a BS 620 and one or more user equipment (UE) 611, 612 and 613. In some embodiments, the UEs access the BS (e.g., the network) using implementations of the disclosed technology 631, 632, 633), which then enables subsequent communication (641, 642, 643) from the BS to the UEs. The UE may be, for example, a smartphone, a tablet, a mobile computer, a machine to machine (M2M) device, an Internet of Things (IoT) device, and so on.

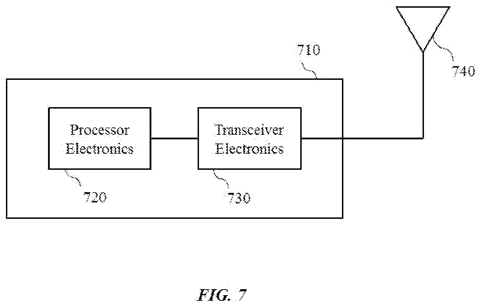

FIG. 7 shows an example of a block diagram representation of a portion of an apparatus. An apparatus 710 such as a base station or a user device which may be any wireless device (or UE) can include processor electronics 720 such as a microprocessor that implements one or more of the techniques presented in this document. The apparatus 710 can include transceiver electronics 730 to send and/or receive wireless signals over one or more communication interfaces such as antenna 740. The apparatus 710 can include other communication interfaces for transmitting and receiving data. The apparatus 710 can include one or more memories (not explicitly shown) configured to store information such as data and/or instructions. In some implementations, the processor electronics 720 can include at least a portion of transceiver electronics 730. In some embodiments, at least some of the disclosed techniques, modules or functions are implemented using the apparatus 710.

In some embodiments, a base station may be configured to implement some or all of the base station side techniques described in the present document.

It is intended that the specification, together with the drawings, be considered exemplary only, where exemplary means an example and, unless otherwise stated, does not imply an ideal or a preferred embodiment. As used herein, the use of "or" is intended to include "and/or", unless the context clearly indicates otherwise.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

While this document contains many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few implementations and examples are described and other implementations, enhancements and variations can be made based on what is described and illustrated in this disclosure.

## Claims

1. A method of wireless communication, the method performed by a user device (611, 612, 613) and comprising:
receiving, from a network device (620), i) measurement configuration information including a SSB based measurement timing configuration, SMTC, and ii) measurement reporting information including a measurement report triggering condition, wherein the SMTC includes an extra measurement gap offset configured for a specific network scenario;
performing measurements based on the measurement configuration information received from the network device (620);
performing an evaluation for a measurement event according to the measurement report triggering condition.

2. The method of claim 1, wherein the measurement configuration information and the measurement reporting information are included in a system information or a dedicated radio resource control signaling.

3. The method of claim 1, wherein the SMTC is configured for a specific frequency, a specific cell, a specific satellite, or a high altitude platform station, HAPS.

4. The method of claim 3, wherein the specific network scenario includes a non-terrestrial network, NTN, an air-to-ground, ATG, a network served by satellites or a high altitude platform station, HAPS, a network served by a low earth orbit, LEO, or Non-LEO satellite, or a network served by a geostationary, GEO, or Non-GEO satellite.

5. The method of claim 1, further comprising triggering to report the measurement event when the measurement report triggering condition is satisfied.

6. The method of claim 1, wherein the measurement report triggering condition is an area scope configured for a serving cell, a serving frequency, a neighbour cell, or a neighboring frequency, or a time range configured for a serving cell, a serving frequency, a neighbour cell, or a neighbor frequency, and wherein the area scope is configured as one of followings:
a distance between UE (611, 612, 613) and one of a satellite, a high altitude platform station, HAPS, a cell center, or a reference point;
a single reference location and a radius associated with the single reference location;
a list of location coordinates;
a list of tracking area identifiers, TAIs, of terrestrial network, TN, cells;
two pairs of high and low thresholds for longitude and latitude; or
either low or high threshold along with a offset for longitude and latitude.

7. The method of claim 1, wherein the measurement report triggering condition is configured together with a periodical measurement report triggering condition or an event based triggering condition based on reference signal received power, RSRP, reference signal received quality, RSRQ, or signal to noise and interference ratio, SINR.

8. The method of claim 1, further comprising triggering a measurement report to be sent when one or all of the measurement report triggering condition, a periodical measurement report triggering condition or an event based triggering condition based on reference signal received power, RSRP, reference signal received quality, RSRQ, or signal to noise and interference ratio, SINR, are satisfied.

9. A method of wireless communication, the method performed by a network device (620) and comprising:
transmitting, to a user device (611, 612, 613), i) measurement configuration information including a SSB based measurement timing configuration, SMTC, and ii) measurement reporting information including a measurement report triggering condition, wherein the SMTC includes an extra measurement gap offset configured for a specific network scenario; and
receiving, from the user device (611, 612, 613), a measurement report including results of measurements according to the measurement reporting information,

10. The method of claim 9, wherein the at least one of the measurement configuration information or the measurement reporting information is included in a system information or a dedicated radio resource control signaling.

11. The method of claim 9, wherein the SMTC is configured for a specific network scenario, a specific frequency, a specific cell, a specific satellite, or a high altitude platform station, HAPS.

12. The method of claim 11, wherein the specific network scenario includes:
a non-terrestrial network, NTN;
an air-to-ground, ATG;
a network served by satellites or a high altitude platform station, HAPS;
a network served by a low earth orbit, LEO, or Non-LEO satellite; or
a network served by a geostationary, GEO, or Non-GEO satellite, or
wherein the SMTC further includes one of followings:
a default or limited SMTC configuration;
an indicator showing whether extra compensation is needed in the SMTC;
an indicator showing reference timing of the SMTC is the timing on the satellite or HAPS serving the primary cell, PCell, or the timing on the NTN/HAPS GW serving the PCell; or
a start timing reference used to indicate a start point of the SMTC.

13. The method of claim 9, wherein the measurement report triggering condition is an area scope configured for a serving cell, a serving frequency, a neighbour cell, or a neighboring frequency, or a time range configured for a serving cell, a serving frequency, a neighbour cell, or a neighbor frequency, and
wherein the area scope is configured as one of followings:
a distance between UE (611, 612, 613) and one of a satellite, a high altitude platform station, HAPS, a cell center, or a reference point;
a single reference location and a radius associated with the single reference location;
a list of location coordinates;
a list of tracking area identifiers, TAIs, of terrestrial network, TN, cells;
two pairs of high and low thresholds for longitude and latitude; or
either low or high threshold along with a offset for longitude and latitude.

14. The method of claim 9, wherein the measurement report triggering condition is configured together with a periodical measurement report triggering condition or an event based triggering condition based on reference signal received power, RSRP, reference signal received quality, RSRQ, or signal to noise and interference ratio, SINR.

15. A user device (611, 612, 613) comprising a processor (220) configured to implement a method recited in any one of claims 1 to 8.

16. A network device (620) comprising a processor (220) configured to implement a method recited in any one of claims 9 to 14.

## Patentansprüche

1. Verfahren einer drahtlosen Kommunikation, das von einer Benutzervorrichtung (611, 612, 613) durchgeführt wird und aufweisend:
Empfangen, von einer Netzwerkvorrichtung (620), von i) Messkonfigurationsinformationen, die eine SSB-basierte Messzeitkonfiguration, SMTC, umfassen, und ii) Messberichtsinformationen, die eine Messberichtsauslösungsbedingung umfassen, wobei die SMTC einen zusätzlichen Messabstandsversatz umfasst, der für ein spezifisches Netzwerkszenario konfiguriert ist;
Durchführen von Messungen basierend auf den von der Netzwerkvorrichtung (620) empfangenen Messkonfigurationsinformationen;
Durchführen einer Auswertung für ein Messereignis nach der Messberichtsauslösungsbedingung.

2. Verfahren nach Anspruch 1, wobei die Messkonfigurationsinformationen und die Messberichtsinformationen in Systeminformationen oder einer dedizierten Funkressourcensteuerungssignalisierung eingeschlossen sind.

3. Verfahren nach Anspruch 1, wobei die SMTC für eine spezifische Frequenz, eine spezifische Zelle, einen spezifischen Satelliten oder eine hochgelegene Plattformstation, HAPS, konfiguriert ist.

4. Verfahren nach Anspruch 3, wobei das spezifische Netzwerkszenario ein nicht-terrestrisches Netzwerk, NTN, ein Luft-Boden-Netzwerk, ATG, ein Netzwerk, das von Satelliten oder einer hochgelegenen Plattformstation, HAPS, bedient wird, ein Netzwerk, das von einem Satelliten in niedriger Erdumlaufbahn, LEO, oder einem Nicht-LEO-Satelliten bedient wird, oder ein Netzwerk, das von einem geostationären, GEO, oder einem Nicht-GEO-Satelliten bedient wird, umfasst.

5. Verfahren nach Anspruch 1, ferner aufweisend ein Auslösen einer Meldung des Messereignisses, wenn die Messberichtsauslösungsbedingung erfüllt ist.

6. Verfahren nach Anspruch 1, wobei die Messberichtsauslösungsbedingung ein für eine bedienende Zelle, eine bedienende Frequenz, eine Nachbarzelle oder eine Nachbarfrequenz konfigurierter Bereichsumfang oder ein für eine bedienende Zelle, eine bedienende Frequenz, eine Nachbarzelle oder eine Nachbarfrequenz konfigurierter Zeitbereich ist und wobei der Bereichsumfang als eine/einer/eines der Folgenden konfiguriert ist:
eine Distanz zwischen UE (611, 612, 613) und einem von einem Satelliten, einer hochgelegenen Plattformstation, HAPS, einem Zellzentrum oder einem Referenzpunkt;
ein einzelner Referenzstandort und ein mit dem einzelnen Referenzstandort verbundener Radius;
eine Liste von Standortkoordinaten;
eine Liste von Tracking-Bereichsidentifikatoren, TAls, von Zellen eines terrestrischen Netzwerks, TN;
zwei Paare von hohen und niedrigen Schwellenwerten für den Längen- und Breitengrad; oder
entweder niedriger oder hoher Schwellenwert zusammen mit einem Versatz für den Längen- und Breitengrad.

7. Verfahren nach Anspruch 1, wobei die Messberichtsauslösungsbedingung zusammen mit einer periodischen Messberichtsauslösungsbedingung oder einer ereignisbasierten Auslösebedingung basierend auf der Empfangsleistung des Referenzsignals, RSRP, der Empfangsqualität des Referenzsignals, RSRQ, oder des Signal-Rausch- und Interferenzverhältnisses, SINR, konfiguriert ist.

8. Verfahren nach Anspruch 1, ferner aufweisend das Auslösen eines Messberichts, der gesendet werden soll, wenn eine oder alle der Messberichtsauslösungsbedingungen, einer periodischen Messberichtsauslösungsbedingung oder einer ereignisbasierten Auslösebedingung basierend auf der Empfangsleistung des Referenzsignals, RSRP, der Empfangsqualität des Referenzsignals, RSRQ, oder dem Signal-Rausch- und Interferenzverhältnis, SINR, erfüllt sind.

9. Verfahren für die drahtlose Kommunikation, das von einer Netzwerkvorrichtung (620) durchgeführt wird und aufweisend:
Übertragen, an eine Benutzervorrichtung (611, 612, 613), von i) Messkonfigurationsinformationen, die eine SSB-basierte Messzeitkonfiguration, SMTC, umfassen, und ii) Messberichtsinformationen, die eine Messberichtsauslösungsbedingung umfassen, wobei die SMTC einen zusätzlichen Messabstandsversatz umfasst, der für ein spezifisches Netzwerkszenario konfiguriert ist; und
Empfangen, von der Benutzervorrichtung (611, 612, 613), eines Messberichts, der Ergebnisse von Messungen nach den Messberichtsinformationen umfasst,

10. Verfahren nach Anspruch 9, wobei mindestens eine der Messkonfigurationsinformationen oder der Messberichtsinformationen in Systeminformationen oder einer dedizierten Funkressourcensteuerungssignalisierung umfasst ist.

11. Verfahren nach Anspruch 9, wobei die SMTC für ein spezifisches Netzwerkszenario, eine spezifische Frequenz, eine spezifische Zelle, einen spezifischen Satelliten oder eine hochgelegene Plattformstation, HAPS, konfiguriert ist.

12. Verfahren nach Anspruch 11, wobei das spezifische Netzwerkszenario umfasst:
ein nicht-terrestrisches Netzwerk, NTN;
ein Luft-Boden-Netzwerk, ATG;
ein Netzwerk, das von Satelliten oder einer hochgelegenen Plattformstation, HAPS, bedient wird;
ein Netzwerk, das von einem Satelliten in niedriger Erdumlaufbahn, LEO, oder einem Nicht-LEO-Satelliten bedient wird; oder
ein Netzwerk, das von einem geostationären, GEO, oder einem Nicht-GEO-Satelliten bedient wird, oder
wobei die SMTC ferner eines der Folgenden umfasst:
eine Standard- oder eingeschränkte SMTC-Konfiguration;
einen Indikator, der anzeigt, ob in der SMTC eine zusätzliche Entschädigung erforderlich ist;
einen Indikator, der anzeigt, dass der Referenzzeitpunkt der SMTC der Zeitpunkt auf dem Satelliten oder HAPS ist, der die Primärzelle PCell bedient, oder der Zeitpunkt auf dem NTN/HAPS GW, der die PCell bedient; oder
eine Startzeitreferenz, die verwendet wird, um einen Startpunkt der SMTC anzugeben.

13. Verfahren nach Anspruch 9, wobei die Messberichtsauslösungsbedingung ein für eine bedienende Zelle, eine bedienende Frequenz, eine Nachbarzelle oder eine Nachbarfrequenz konfigurierter Bereichsumfang oder ein für eine bedienende Zelle, eine bedienende Frequenz, eine Nachbarzelle oder eine Nachbarfrequenz konfigurierter Zeitbereich ist und
wobei der Bereichsumfang als eine/einer/eines der Folgenden konfiguriert ist:
eine Distanz zwischen UE (611, 612, 613) und einem von einem Satelliten, einer hochgelegenen Plattformstation, HAPS, einem Zellzentrum oder einem Referenzpunkt;
ein einzelner Referenzstandort und ein mit dem einzelnen Referenzstandort verbundener Radius;
eine Liste von Standortkoordinaten;
eine Liste von Tracking-Bereichsidentifikatoren, TAls, von Zellen eines terrestrischen Netzwerks, TN;
zwei Paare von hohen und niedrigen Schwellenwerten für den Längen- und Breitengrad; oder
entweder niedriger oder hoher Schwellenwert zusammen mit einem Versatz für den Längen- und Breitengrad.

14. Verfahren nach Anspruch 9, wobei die Messberichtsauslösungsbedingung zusammen mit einer periodischen Messberichtsauslösungsbedingung oder einer ereignisbasierten Auslösebedingung basierend auf der Empfangsleistung des Referenzsignals, RSRP, der Empfangsqualität des Referenzsignals, RSRQ, oder des Signal-Rausch- und Interferenzverhältnisses, SINR, konfiguriert ist.

15. Benutzervorrichtung (611, 612, 613), aufweisend einen Prozessor (220), der konfiguriert ist, um ein in einem der Ansprüche 1 bis 8 beschriebenes Verfahren zu implementieren.

16. Netzwerkvorrichtung (620), aufweisend einen Prozessor (220), der konfiguriert ist, um ein in einem der Ansprüche 9 bis 14 beschriebenes Verfahren zu implementieren.

## Revendications

1. Procédé de communication sans fil, le procédé étant mis en œuvre par un dispositif utilisateur (611, 612, 613) et comprenant :
la réception, depuis un dispositif de réseau (620), i) d'informations de configuration de mesure comportant une configuration de temporisation de mesure basée sur SSB, SMTC, et ii) d'informations de rapport de mesure comportant une condition de déclenchement de rapport de mesure, dans lequel la SMTC comporte un décalage d'intervalle de mesure supplémentaire configuré pour un scénario de réseau spécifique ;
la réalisation de mesures sur la base des informations de configuration de mesure reçues depuis le dispositif de réseau (620) ;
la réalisation d'une évaluation pour un événement de mesure selon la condition de déclenchement de rapport de mesure.

2. Procédé selon la revendication 1, dans lequel les informations de configuration de mesure et les informations de rapport de mesure sont incluses dans des informations système ou une signalisation de commande de ressources radio dédiée.

3. Procédé selon la revendication 1, dans lequel la SMTC est configurée pour une fréquence spécifique, une cellule spécifique, un satellite spécifique, ou une plateforme à haute altitude, PHA.

4. Procédé selon la revendication 3, dans lequel le scénario de réseau spécifique comporte un réseau non terrestre, NTN, un réseau air-sol, ATG, un réseau desservi par des satellites ou une plateforme à haute altitude, PHA, un réseau desservi par un satellite en orbite basse, LEO, ou non LEO, ou un réseau desservi par un satellite géostationnaire, GEO ou non GEO.

5. Procédé selon la revendication 1, comprenant en outre le déclenchement du rapport de l'événement de mesure lorsque la condition de déclenchement de rapport de mesure est satisfaite.

6. Procédé selon la revendication 1, dans lequel la condition de déclenchement de rapport de mesure est une portée de zone configurée pour une cellule de desserte, une fréquence de desserte, une cellule voisine ou une fréquence voisine, ou une plage temporelle configurée pour une cellule de desserte, une fréquence de desserte, une cellule voisine ou une fréquence voisine, et dans lequel la portée de zone est configurée comme l'un des suivants :
une distance entre l'UE (611, 612, 613) et l'un parmi un satellite, une plateforme à haute altitude, PHA, un centre de cellule ou un point de référence ;
un emplacement de référence unique et un rayon associé à l'emplacement de référence unique ;
une liste de coordonnées d'emplacement ;
une liste d'identifiants de zone de suivi, TAI, de cellules de réseau terrestre, TN ;
deux paires de seuils haut et bas pour la longitude et la latitude ; ou
soit un seuil bas soit un seuil haut conjointement avec un décalage pour la longitude et la latitude.

7. Procédé selon la revendication 1, dans lequel la condition de déclenchement de rapport de mesure est configurée conjointement avec une condition de déclenchement de rapport de mesure périodique ou une condition de déclenchement basée sur un événement basée sur une puissance reçue de signal de référence, RSRP, une qualité reçue de signal de référence, RSRQ, ou un rapport signal sur bruit et interférence, SINR.

8. Procédé selon la revendication 1, comprenant en outre le déclenchement d'un rapport de mesure à envoyer lorsqu'une ou la totalité parmi la condition de déclenchement de rapport de mesure, une condition de déclenchement de rapport de mesure périodique ou une condition de déclenchement basée sur un événement basée sur une puissance reçue du signal de référence, RSRP, une qualité reçue de signal de référence, RSRQ, ou un rapport signal sur bruit et interférence, SINR, sont satisfaites.

9. Procédé de communication sans fil, le procédé étant mis en œuvre par un dispositif de réseau (620) et comprenant :
la transmission, à un dispositif utilisateur (611, 612, 613), i) d'informations de configuration de mesure comportant une configuration de temporisation de mesure basée sur SSB, SMTC, et ii) d'informations de rapport de mesure comportant une condition de déclenchement de rapport de mesure, dans lequel la SMTC comporte un décalage d'intervalle de mesure supplémentaire configuré pour un scénario de réseau spécifique ; et
la réception, depuis le dispositif utilisateur (611, 612, 613), d'un rapport de mesure comportant des résultats de mesures selon les informations de rapport de mesure,

10. Procédé selon la revendication 9, dans lequel l'au moins une parmi les informations de configuration de mesure ou les informations de rapport de mesure est incluse dans des informations système ou une signalisation de commande de ressources radio dédiée.

11. Procédé selon la revendication 9, dans lequel la SMTC est configurée pour un scénario de réseau spécifique, une fréquence spécifique, une cellule spécifique, un satellite spécifique, ou une plateforme à haute altitude, PHA.

12. Procédé selon la revendication 11, dans lequel le scénario de réseau spécifique comporte :
un réseau non terrestre, NTN ;
un réseau air-sol, ATG ;
un réseau desservi par des satellites ou une plateforme à haute altitude, PHA ;
un réseau desservi par un satellite en orbite terrestre basse, LEO, ou non LEO ; ou
un réseau desservi par un satellite géostationnaire, géostationnaire, GEO, ou non GEO, ou
dans lequel la SMTC comporte en outre l'un des suivants :
une configuration SMTC par défaut ou limitée ;
un indicateur montrant si une compensation supplémentaire est nécessaire dans la SMTC ;
un indicateur montrant qu'une temporisation de référence de la SMTC est la temporisation sur le satellite ou la PHA desservant la cellule primaire, PCell, ou la temporisation sur la passerelle, GW, NTN/PHA desservant la PCell ; ou
une référence de temporisation de début utilisée pour indiquer un point de début de la SMTC.

13. Procédé selon la revendication 9, dans lequel la condition de déclenchement de rapport de mesure est une portée de zone configurée pour une cellule de desserte, une fréquence de desserte, une cellule voisine ou une fréquence voisine, ou une plage temporelle configurée pour une cellule de desserte, une fréquence de desserte, une cellule voisine ou une fréquence voisine, et
dans lequel la portée de zone est configurée comme l'un des éléments suivants :
une distance entre l'UE (611, 612, 613) et l'un parmi un satellite, une plateforme à haute altitude, PHA, un centre de cellule ou un point de référence ;
un emplacement de référence unique et un rayon associé à l'emplacement de référence unique ;
une liste de coordonnées d'emplacement ;
une liste d'identifiants de zone de suivi, TAI, de cellules de réseau terrestre, TN ;
deux paires de seuils haut et bas pour la longitude et la latitude ; ou
soit un seuil bas soit un seuil haut conjointement avec un décalage pour la longitude et la latitude.

14. Procédé selon la revendication 9, dans lequel la condition de déclenchement de rapport de mesure est configurée conjointement avec une condition de déclenchement de rapport de mesure périodique ou une condition de déclenchement basée sur un événement basée sur une puissance reçue de signal de référence, RSRP, une qualité reçue de signal de référence, RSRQ, ou un rapport signal sur bruit et interférence, SINR.

15. Dispositif utilisateur (611, 612, 613), comprenant un processeur (220) configuré pour mettre en œuvre un procédé selon l'une quelconque des revendications 1 à 8.

16. Dispositif de réseau (620), comprenant un processeur (220) configuré pour mettre en œuvre un procédé selon l'une quelconque des revendications 9 à 14.
